(19) **Europäisches Patentamt / European Patent Office / Office européen des brevets**

(11) **EP 4 614 914 A1**

(12) **EUROPEAN PATENT APPLICATION**
published in accordance with Art. 153(4) EPC

(43) Date of publication:
**10.09.2025  Bulletin 2025/37**

(21) Application number: **22966912.2**

(22) Date of filing: **01.12.2022**

(51) International Patent Classification (IPC):
**H04L 27/26** (2006.01)

(52) Cooperative Patent Classification (CPC):
**H04L 27/26**

(86) International application number:
**PCT/CN2022/136021**

(87) International publication number:
**WO 2024/113323 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **HUANG, Huang**
  **Shenzhen, Guangdong 518129 (CN)**
• **VAMEGHESTAHBANATI, Monirosharieh**
  **Shenzhen, Guangdong 518129 (CN)**
• **WEN, Shan**
  **Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **SIGNAL TRANSMISSION METHOD AND DEVICE**

(57)    This application discloses a signal transmission method and apparatus. The method includes: obtaining $M$ frequency-domain sequences; performing preset processing on each of the $M$ frequency-domain sequences, so that a time-domain sequence corresponding to each frequency-domain sequence shifts, and $M$ time-domain sequences are obtained, where a time-domain shift amount $\Delta_i$ of a time-domain sequence corresponding to an $(i\text{-}1)^{\text{th}}$ frequency-domain sequence of the $M$ frequency-domain sequences, a total time-domain shift amount $\Delta_i$ of a time-domain sequence corresponding to an $i^{\text{th}}$ frequency-domain sequence, and a length $Li$ of a CP of an $i^{\text{th}}$ CP-OFDM signal meet a preset relationship; adding CPs to the $M$ time-domain sequences, to form $M$ first CP-OFDM signals; and sending the $M$ first CP-OFDM signals. According to this application, total time-domain shift amounts of time-domain sequences corresponding to two adjacent frequency-domain sequences, and a length of a CP can meet the preset relationship, so that adjacent CP-OFDM symbols are continuous, reducing out-of-band interference and leakage, and improving reliability of ISAC.

FIG. 6

**Description**

<u>TECHNICAL FIELD</u>

This application relates to the field of communication technologies, and in particular, to a signal transmission method and apparatus.

<u>BACKGROUND</u>

Integrated sensing and communication (integrated sensing and communication, ISAC) is widely considered as a key application scenario of next-generation wireless communication. Specifically, integrated sensing and communication means that a sent radio signal has both sensing and communication capabilities. Communication means that a transmitting end sends information to a receiving end. Sensing includes sensing an ambient environment, sensing a velocity at which an object moves, sensing a distance to an object, and the like.

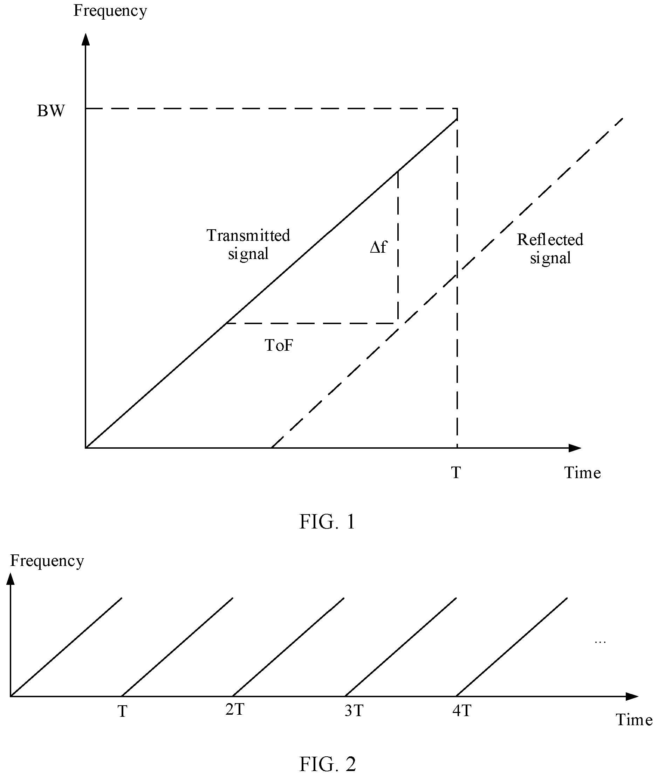

For example, when a pilot signal is designed as a continuous signal whose frequency increases linearly over time (that is, a transmitted signal), that is, a linear frequency modulated continuous wave (Frequency Modulated Continuous Wave, FMCW), which is also referred to as a chirp (Chirp) signal, ISAC can be implemented, as shown in FIG. 1.

During actual communication, the pilot signal may be transmitted by an orthogonal frequency division multiplexing (orthogonal frequency division multiplexing, OFDM) symbol. To overcome intersymbol interference caused by a multipath delay, a cyclic prefix (Cyclic prefix, CP) may be added before the OFDM symbol. In this way, an OFDM symbol with a CP (which is referred to as a CP-OFDM symbol for short) is formed and to be sent out, as shown in FIG. 2.

However, due to presence of CPs, a plurality of CP-OFDM symbols are not continuous, resulting in severe out-of-band interference and leakage and affecting reliability of ISAC.

<u>SUMMARY</u>

Embodiments of this application provide a signal transmission method and apparatus, to resolve the following problem: how to generate a pilot signal, so that CP-OFDM symbols are continuous, so as to ensure low out-of-band interference and leakage and improve reliability of ISAC.

According to a first aspect, a signal transmission method is provided. The method includes: obtaining $M$ frequency-domain sequences, where the $M$ frequency-domain sequences one-to-one correspond to $M$ first cyclic prefix CP-orthogonal frequency division multiplexing OFDM signals, $M$ is a positive integer, m sequences of the $M$ frequency-domain sequences are the same, and $m$ is an integer less than or equal to $M$ and greater than or equal to 0; performing preset processing on each of the $M$ frequency-domain sequences, so that a time-domain sequence corresponding to each frequency-domain sequence shifts, and $M$ time-domain sequences are obtained, where a time-domain shift amount $\Delta_{i-1}$ of a time-domain sequence corresponding to an $(i-1)^{\text{th}}$ frequency-domain sequence of the $M$ frequency-domain sequences, a total time-domain shift amount $\Delta_i$ of a time-domain sequence corresponding to an $i^{\text{th}}$ frequency-domain sequence, and a length $L_i$ of a CP of an $i^{\text{th}}$ CP-OFDM signal meet a preset relationship; adding a CP to each of the $M$ time-domain sequences, to form the $M$ first CP-OFDM signals; and sending the $M$ first CP-OFDM signals.

In this embodiment of this application, the preset processing is performed on the frequency-domain sequences, so that total time-domain shift amounts of time-domain sequences corresponding to two adjacent frequency-domain sequences, and a length of a CP can meet the preset relationship, and further adjacent CP-OFDM symbols are continuous, reducing or even avoiding out-of-band interference and leakage, and improving reliability of ISAC.

In a possible design, the preset processing includes one or more of the following: frequency-domain shifting, phase shifting, or time-domain shifting.

In this design, that the time-domain sequence corresponding to each frequency-domain sequence shifts may be implemented by performing frequency-domain processing (for example, frequency-domain shifting and phase shifting) or performing time-domain processing (for example, time-domain shifting). The solutions are highly flexible.

In a possible design, the preset relationship may include: $\Delta_i - \Delta_{i-1} = L_i + \tilde{c}_i L$, where $\tilde{c}_i$ is an integer, and $L$ is a length of the time-domain sequence corresponding to each frequency-domain sequence. It may be understood that due to cyclic shifting, the time-domain sequence is shifted by a length of $\tilde{c}_i L$, and shifts corresponding to all the integers $\tilde{c}_i$ are equivalent. Usually, $\tilde{c}_i L$ may be 0, that is, $\Delta_i - \Delta_{i-1} = L_i$.

In this design, a difference between total time-domain shift amounts of time-domain sequences corresponding to two adjacent frequency-domain sequences is related to a CP corresponding to a frequency-domain sequence, so that a position of the CP is reserved between the time-domain sequences corresponding to the two adjacent frequency-domain sequences, implementing that two adjacent CP-OFDM symbols are continuous.

In a possible design, the performing preset processing on each of the $M$ frequency-domain sequences includes:

performing cyclic shifting on the $i^{th}$ frequency-domain sequence $X_i(k)$ of the $M$ frequency-domain sequences, so that a signal in the $i^{th}$ frequency-domain sequence $X_i(k)$ shifts in frequency domain, and a second frequency-domain sequence $\tilde{X}_i(k) = X((k + \alpha_i) \ Mod \ N)$ is obtained, where $\alpha_i$ is a frequency-domain shift amount, and $N$ is a quantity of reference signals;

performing phase shifting on the second frequency-domain sequence $\tilde{X}_i(k)$, so that a phase of a signal in the $i^{th}$ frequency-domain sequence $\tilde{X}_i(k)$ shifts, and a third frequency-domain sequence $\overline{X}_i(k) = \tilde{X}_i(k)e^{j2\pi\beta ik}$ is obtained, where $\beta_i$ is a phase shift amount, and $\beta_i$ is a real number; and

mapping the third frequency-domain sequence $\overline{X}_i(k)$ to $N$ subcarriers by using a map function $f(l), l \in \Phi$, and finding an inverse Fourier transform and performing time-domain shifting for $L$ points, to obtain a first time-domain signal $r_i(t) = \Sigma_{l\in\Phi} W_i(l) \cdot \overline{X}_i(f(l))e^{j2\pi l\Delta f(t-L_iTc-ts,i-O_iTc)}$, where $T_c$ is a unit time, $T_c = \dfrac{1}{\Delta f L}$, $\Delta f$ is a subcarrier width, $L_i$ is the length of the CP of the $i^{th}$ CP-OFDM signal, $L_i$ is an integer, $t_{s,i}$ is a starting time of the $i^{th}$ CP-OFDM signal, $t_{e,i}$ is an ending time of the $i^{th}$ CP-OFDM signal, duration of the $i^{th}$ CP-OFDM signal is $t_{e,i} - t_{s,i} = (L_i + L)T_c$, a value range of $t$ is between $t_{s,i}$ and $t_{e,i}$, $0 \le f(l) < N$, $\Phi$ is a set of reference signal subcarriers, $W_i(l)$ is a weighting coefficient for an $l^{th}$ subcarrier, $f(l)$ is an index of $\overline{X}_i(k)$ corresponding to the $l^{th}$ subcarrier, $O_i$ is a time-domain shift amount, and $O_i$ is a real number; and

the total time-domain shift amount $\Delta_i$ and the frequency-domain shift amount $\alpha_i$ that are of the signal in the $i^{th}$ frequency-domain sequence, the phase shift amount $\beta_i$, and the time-domain shift amount $O_i$ meet the following relationship: $\Delta_i = L\beta_i - O_i - L\gamma_i + \dfrac{\alpha_i L}{N_{ZC}}$, where $\gamma_i$ is a phase shift amount generated by an antenna port for the signal in the $i^{th}$ frequency-domain sequence $X_i(k)$, and $N_{ZC}$ is a length of $X_i(k)$.

In this design, steps of the preset processing are described, that is, frequency-domain shifting, phase shifting, and time-domain shifting, and based on frequency-domain shifting, phase shifting, and time-domain shifting, a specific expression of the preset relationship is provided, that is,

$$\Delta_i - \Delta_{i-1} = (L\beta_i - O_i - L\gamma_i + \frac{\alpha_i L}{N_{ZC}}) - (L\beta_{i-1} - O_{i-1} - L\gamma_{i-1} + \frac{\alpha_{i-1}L}{N_{ZC}})$$. In this way, reliability of the solution is improved.

In a possible design, $\alpha_i = 0$, $O_i = 0$, $L_i = L_{CP}$, and $\beta_i = i\dfrac{L_{CP}}{L} + \gamma_i$, where $L_{CP}$ is a preset value.

In a possible design, $\alpha_i = 0$, $\beta_i = \gamma_i$, $L_i = L_{CP}$, and $O_i = -iL_{CP}$, where $L_{CP}$ is a preset value.

It may be understood that the foregoing two sets of parameters are merely examples, and an actual parameter design is not limited to the foregoing two implementations.

In a possible design, $\alpha_i = 0$, $O_i = 0$, $L_i = L_{CP}$, and $\beta_i = (i + 1)\dfrac{L_{CP}}{L} + \gamma_i$, where $L_{CP}$ is a preset value.

Correspondingly, $\alpha_0 = 0$, $O_0 = 0$, and $\beta_0 = 1\dfrac{L_{CP}}{L} + \gamma_i$.

In a possible design, $\alpha_i = 0$, $\beta_i = \gamma_i$, $L_i = L_{CP}$, and $O_i = -(i + 1)L_{CP}$, where $L_{CP}$ is a preset value. Correspondingly, $\alpha_0 = 0$, $\beta_0 = \gamma_0$, and $O_0 = -L_{CP}$.

In the foregoing two implementations, it can be implemented that an initial frequency of a $0^{th}$ CP-OFDM signal is a maximum frequency or a minimum frequency. Therefore, a larger quantity of complete chirp signals can be generated in a same quantity of CP-OFDM cycles, further improving performance of ISAC.

In a possible design, $\beta_i L_\beta$ is a positive integer, and $L_\beta$ is a positive integer.

For example:

$$\beta_i L_\beta = \left\lceil \frac{\Delta_{i-1} + L_i + \tilde{c}_i L + O_i + L\gamma_i - \frac{\alpha_i L}{N_{ZC}}}{\frac{L}{L_\beta}} \right\rceil,$$

or

$$\beta_i L_\beta = \left\lfloor \frac{\Delta_{i-1} + L_i + \tilde{c}_i L + O_i + L\gamma_i - \frac{\alpha_i L}{N_{ZC}}}{\frac{L}{L_\beta}} \right\rfloor.$$

In the foregoing design, $\beta_i L_\beta$ is constrained to be a positive integer, reducing complexity of implementing the solution.

In a possible design, the $i^{th}$ frequency-domain sequence $X_i(k)$ may be alternatively generated based on a time-domain ZC sequence $x(n)$ or a frequency-domain ZC sequence $X(k)$, where

$$x(n) = \mathrm{e}^{-\frac{j\pi q n(n+c+2p)}{N_{ZC}}}, 0 \le n < N_{ZC},$$

where $q$ is a root of the time-domain ZC sequence, $0 < |q| < N_{ZC}$, $|q|$ and $N_{ZC}$ are relatively prime, $N_{ZC}$ is a length of the time-domain ZC sequence and is a positive integer, $c = N \bmod 2$, $p$ is an integer, and $n$ is an index of the sequence $x(n)$;

$$X(k) = \mathrm{e}^{-\frac{j\pi q k(k+c+2p)}{N_{ZC}}}, 0 \le k < N_{ZC},$$

where $k$ is an index of the sequence $X(k)$, $q$ is a root of the shown frequency-domain ZC sequence, $0 < |q| < N_{ZC}$, $|q|$ and $N_{ZC}$ are relatively prime, $N_{ZC}$ is a length of the frequency-domain ZC sequence and is a positive integer, $c = N \bmod 2$, and $p$ is an integer; and

$$\beta_0 L = L_0 - \frac{qpL}{N_{ZC}} + \gamma_0 L - \frac{\alpha_0 L}{N_{ZC}} + O_i + c_0 L;$$

or $\beta_0 L_\beta$ is a positive integer, and $L_\beta$ is a positive integer.

$\beta_0 L_\beta$ is a positive integer. For example:

$$\beta_0 L_\beta = \left\lceil \frac{L_0 - \dfrac{qpL}{N_{ZC}} + \gamma_0 L - \dfrac{\alpha_0 L}{N_{ZC}} + O_i + c_0 L}{\dfrac{L}{L_\beta}} \right\rceil,$$

or

$$\beta_0 L_\beta = \left\lfloor \frac{L_0 - \dfrac{qpL}{N_{ZC}} + \gamma_0 L - \dfrac{\alpha_0 L}{N_{ZC}} + O_i + c_0 L}{\dfrac{L}{L_\beta}} \right\rfloor.$$

It may be understood that a frequency-domain sequence can be obtained by finding a Fourier transform of a time-domain sequence $x(n)$.

In this design, a specific expression of $\beta_0 L_\beta$ is provided, and $\beta_0 L_\beta$ is constrained to be a positive integer, reducing complexity of implementing the solution.

In a possible design, considering a size of a resource block (resource block, RB) and a data scheduling bandwidth, $L_\beta$ is a multiple of at least one of 2, 3, or 5.

In a possible design, after the $M$ first CP-OFDM signals are sent, $M$ second CP-OFDM signals may be further received, where the $M$ second CP-OFDM signals are signals that are obtained after the $M$ first CP-OFDM signals are transmitted over a channel; and a distance to and/or a velocity of a target are/is determined based on the $M$ first CP-OFDM signals and the $M$ second CP-OFDM signals.

In this design, the distance to and/or the velocity of the target can be sensed based on the CP-OFDM signals.

In a possible design, the first CP-OFDM signal is a pilot signal. In other words, in this embodiment of this application, the pilot signal may be generated by using the foregoing method, so that any two adjacent CP-OFDM signals in the pilot signal are continuous.

In this design, performance of ISAC that is implemented based on the pilot signal can be improved.

According to a second aspect, a signal transmission apparatus is provided. The apparatus includes a module, a unit, or a technical means that is configured to implement the method in any one of the first aspect or the possible designs of the first aspect.

For example, the apparatus may include:

a processing module, configured to: obtain $M$ frequency-domain sequences, where the $M$ frequency-domain sequences one-to-one correspond to $M$ first cyclic prefix CP-orthogonal frequency division multiplexing OFDM signals, $M$ is a positive integer, $m$ sequences of the $M$ frequency-domain sequences are the same, and $m$ is an integer less than or equal to $M$ and greater than or equal to 0; perform preset processing on each of the $M$ frequency-domain sequences, so that a time-domain sequence corresponding to each frequency-domain sequence shifts, and $M$ time-domain sequences are obtained, where a time-domain shift amount $\Delta_{i-1}$ of a time-domain sequence corresponding to an $(i-1)^{\text{th}}$ frequency-domain sequence of the $M$ frequency-domain sequences, a total time-domain shift amount $\Delta_i$ of a time-domain sequence corresponding to an $i^{\text{th}}$ frequency-domain sequence, and a length $L_i$ of a CP of an $i^{\text{th}}$ CP-OFDM signal meet a preset relationship; and add a CP to each of the $M$ time-domain sequences, to form the $M$ first CP-OFDM signals; and

a transceiver module, configured to send the $M$ first CP-OFDM signals.

In a possible design, the preset processing includes one or more of the following: frequency-domain shifting, phase shifting, or time-domain shifting.

In a possible design, the preset relationship includes:

$$\Delta_i - \Delta_{i-1} = L_i + \tilde{c}_i L,$$

where $\tilde{c}_i$ is an integer, and $L$ is a length of the time-domain sequence corresponding to each frequency-domain sequence.

In a possible design, when performing the preset processing on each of the $M$ frequency-domain sequences, the processing module is specifically configured to:

perform cyclic shifting on the $i^{\text{th}}$ frequency-domain sequence $X_i(k)$ of the $M$ frequency-domain sequences, so that a signal in the $i^{\text{th}}$ frequency-domain sequence $X_i(k)$ shifts in frequency domain, and a second frequency-domain sequence $\tilde{X}_i(k) = X((k + \alpha_i)\ Mod\ N)$ is obtained, where $\alpha_i$ is a frequency-domain shift amount, and $N$ is a quantity of reference signals;

perform phase shifting on the second frequency-domain sequence $\tilde{X}_i(k)$, so that a phase of a signal in the $i^{\text{th}}$ frequency-domain sequence $\tilde{X}_i(k)$ shifts, and a third frequency-domain sequence $\overline{X}_i(k) = \tilde{X}_i(k)e^{j2\pi\beta ik}$ is obtained, where $\beta_i$ is a phase shift amount, and $\beta_i$ is a real number; and

map the third frequency-domain sequence $\overline{X}_i(k)$ to $N$ subcarriers by using a map function $f(l)$, $l \in \Phi$, and find an inverse Fourier transform and perform time-domain shifting for $L$ points, to obtain a first time-domain signal $r_i(t) = \sum_{l \in \Phi} W_i(l) \cdot \overline{X}_i$

$(f(l))e^{j2\pi l\Delta f(t-L_iTc-ts,i-O_iTc)}$, where $T_c$ is a unit time, $T_c = \dfrac{1}{\Delta f L}$, $\Delta f$ is a subcarrier width, $L_i$ is the length of the CP of the $i^{\text{th}}$ CP-OFDM signal, $L_i$ is an integer, $t_{s,i}$ is a starting time of the $i^{\text{th}}$ CP-OFDM signal, $t_{e,i}$ is an ending time of the $i^{\text{th}}$ CP-OFDM signal, duration of the $i^{\text{th}}$ CP-OFDM signal is $t_{e,i} - t_{s,i} = (L_i + L)T_c$, a value range of $t$ is between $t_{s,i}$ and $t_{e,i}$, $0 \le f(l) < N$, $\Phi$ is a set of reference signal subcarriers, $W_i(l)$ is a weighting coefficient for an $l^{\text{th}}$ subcarrier, $f(l)$ is an index of $\overline{X}_i(k)$ corresponding to the $l^{\text{th}}$ subcarrier, $O_i$ is a time-domain shift amount, and $O_i$ is a real number; and

the total time-domain shift amount $\Delta_i$ and the frequency-domain shift amount $\alpha_i$ that are of the signal in the $i^{\text{th}}$ frequency-domain sequence, the phase shift amount $\beta_i$, and the time-domain shift amount $O_i$ meet the following

relationship: $\Delta_i = L\beta_i - O_i - L\gamma_i + \dfrac{\alpha_i L}{N_{ZC}}$, where $\gamma_i$ is a phase shift amount generated by an antenna port for the signal in the $i^{\text{th}}$ frequency-domain sequence $X_i(k)$, and $N_{ZC}$ is a length of $X_i(k)$.

In a possible design, $\alpha_i = 0$, $O_i = 0$, $L_i = L_{CP}$, and $\beta_i = i\dfrac{L_{CP}}{L} + \gamma_i$, where $L_{CP}$ is a preset value.

In a possible design, $\alpha_i = 0$, $\beta_i = \gamma_i$, $L_i = L_{CP}$, and $O_i = -iL_{CP}$, where $L_{CP}$ is a preset value.

In a possible design, $\alpha_i = 0$, $O_i = 0$, $L_i = L_{CP}$, and $\beta_i = (i+1)\dfrac{L_{CP}}{L} + \gamma_i$, where $L_{CP}$ is a preset value.

In a possible design, $\alpha_i = 0$, $\beta_i = \gamma_i$, $L_i = L_{CP}$, and $O_i = -(i+1)L_{CP}$, where $L_{CP}$ is a preset value.

In a possible design, $\beta_i L_\beta$ is a positive integer, and $L_\beta$ is a positive integer.

In a possible design,

$$\beta_i L_\beta = \left\lceil \frac{\Delta_{i-1}+L_i+\tilde{c}_i L+O_i-\gamma_i+\frac{\alpha_i L}{N_{ZC}}}{\frac{L}{L_\beta}} \right\rceil, \text{ or } \beta_i L_\beta = \left\lfloor \frac{\Delta_{i-1}+L_i+\tilde{c}_i L+O_i-\gamma_i+\frac{\alpha_i L}{N_{ZC}}}{\frac{L}{L_\beta}} \right\rfloor.$$

In a possible design, the processing module is further configured to:
generate the $i^{th}$ frequency-domain sequence $X_i(k)$ based on a time-domain ZC sequence $x(n)$ or a frequency-domain ZC sequence $X(k)$, where

$$x(n) = e^{-\frac{j\pi q n(n+c+2p)}{N_{ZC}}}, 0 \le n < N_{ZC},$$

where $q$ is a root of the time-domain ZC sequence, $0 < |q| < N_{ZC}$, $|q|$ and $N_{ZC}$ are relatively prime, $N_{ZC}$ is a length of the time-domain ZC sequence and is a positive integer, $c = N$ mod 2, $p$ is an integer, and $n$ is an index of the sequence $x(n)$;

$$X(k) = e^{-\frac{j\pi q k(k+c+2p)}{N_{ZC}}}, 0 \le k < N_{ZC}.$$

, where $k$ is an index of the sequence $X(k)$, $q$ is a root of the shown frequency-domain ZC sequence, $0 < |q| < N_{ZC}$, $|q|$ and $N_{ZC}$ are relatively prime, $N_{ZC}$ is a length of the frequency-domain ZC sequence and is a positive integer, $c = N$ mod 2, and $p$ is an integer; and

$$\beta_0 L = L_0 - \frac{qpL}{N_{ZC}} + \gamma_0 L - \frac{\alpha_0 L}{N_{ZC}} + O_i + c_0 L;$$

or $\beta_0 L_\beta$ is a positive integer, and $L_\beta$ is a positive integer.

It may be understood that a frequency-domain sequence can be obtained by finding a Fourier transform of a time-domain sequence $x(n)$.

In a possible design,

$$\beta_0 L_\beta = \left\lceil \frac{L_0 - \frac{qpL}{N_{ZC}} + \gamma_0 L - \frac{\alpha_0 L}{N_{ZC}} + O_i + c_0 L}{\frac{L}{L_\beta}} \right\rceil.$$

, or

$$\beta_0 L_\beta = \left\lfloor \frac{L_0 - \frac{qpL}{N_{ZC}} + \gamma_0 L - \frac{\alpha_0 L}{N_{ZC}} + O_i + c_0 L}{\frac{L}{L_\beta}} \right\rfloor.$$

In a possible design, $L_\beta$ is a multiple of at least one of 2, 3, or 5.

In a possible design, the transceiver module is further configured to: receive $M$ second CP-OFDM signals, where the $M$ second CP-OFDM signals are signals that are obtained after the $M$ first CP-OFDM signals are transmitted over a channel; and the processing module is further configured to: determine a distance to and/or a velocity of a target based on the $M$ first CP-OFDM signals and the $M$ second CP-OFDM signals.

In a possible design, the first CP-OFDM signal is a pilot signal.

According to a third aspect, a communication apparatus is provided, including a processor and an interface circuit. The interface circuit is electrically coupled to the processor. The processor performs the method in any one of the first aspect or the possible designs of the first aspect by using a logic circuit or executing code instructions.

According to a fourth aspect, a computer-readable storage medium is provided. The storage medium stores a computer program or instructions. When the computer program or instructions are run, the method in any one of the first aspect or the possible designs of the first aspect is performed.

According to a fifth aspect, a computer program product is provided, including instructions. When the instructions are run on a computer, the method in any one of the first aspect or the optional implementations of the first aspect is performed.

BRIEF DESCRIPTION OF DRAWINGS

FIG. 1 is a diagram of a chirp signal;
FIG. 2 is a diagram of a plurality of chirp signals;
FIG. 3 is a diagram of mapping to a subcarrier;
FIG. 4 is a diagram showing that OFDM symbols are not continuous;
FIG. 5A, FIG. 5B, and FIG. 5C are diagrams of several possible application scenarios of embodiments of this application;
FIG. 6 is a flowchart of a signal transmission method according to an embodiment of this application;
FIG. 7A is a diagram showing that CP-OFDM symbols are continuous;
FIG. 7B is a diagram showing that CP-OFDM symbols are continuous and an initial frequency of a $0^{th}$ CP-OFDM signal is a minimum frequency;
FIG. 8 is a diagram of out-of-band interference and leakage;
FIG. 9 is a diagram of a structure of a signal transmission apparatus according to an embodiment of this application; and
FIG. 10 is a diagram of a structure of another signal transmission apparatus according to an embodiment of this application.

DESCRIPTION OF EMBODIMENTS

Technical solutions that can be used in embodiments of this application may be used in various communication systems, for example, a 5th generation (5th generation, 5G) communication system, a 6th generation (6th generation, 6G) communication system, another future evolved system, other systems that use wireless communication, or the like.

In embodiments of this application, "at least one" means one or more, and "a plurality of" means two or more. "and/or" describes an association between associated objects, and indicates that three relationships may exist. For example, A and/or B may indicate the following cases: Only A exists, both A and B exist, and only B exists, where A and B may be singular or plural. In the text descriptions of this application, the character "/" usually indicates an "or" relationship between associated objects. In a formula in this application, the character "/" indicates a "division" relationship between associated objects. "including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers do not mean execution orders. Execution orders of processes should be determined based on functions and internal logic of the processes.

Integrated sensing and communication (Integrated sensing and communication, ISAC) is widely considered as a key application scenario of a next-generation wireless communication system (for example, a 6th generation (6th generation, 6G) communication system).

A radar is one of common sensing devices. A working principle of the radar is that a transmitting end sends a continuous signal whose frequency increases linearly over time (that is, a transmitted signal), that is, a linear frequency modulated continuous wave (Frequency Modulated Continuous Wave, FMCW), which is also referred to as a chirp (Chirp) signal, as shown in FIG. 1. When the transmitted signal is reflected by an object, a reflected signal is formed, and is received by the transmitting end. Due to a delay on a propagation path, there is a frequency difference $\Delta f$ between the reflected signal and the transmitted signal. The frequency difference $\Delta f$ is positively correlated with the propagation delay $\tau$:

$$\Delta f = R \cdot \tau = \frac{BW}{T} \cdot \frac{2d}{c},$$

where $R$ is a rate at which the frequency of the continuous frequency modulated signal changes, with a specific value being a ratio of a bandwidth (Bandwidth, BW) of the continuous frequency modulated signal to a cycle $T$ of the continuous frequency modulated signal, $d$ is a distance between a target object (that is, the object that reflects the signal) and the transmitting end (that is, the radar), $c = 3 \cdot 10^8 m/s$ and is a speed at which electromagnetic waves propagate, $BW$ is the bandwidth, and $T$ is the cycle during which the frequency changes.

The radar performs frequency mixing on the received reflected signal and the transmitted signal, to obtain the frequency difference $\Delta f$ between the two signals, and can deduce the distance between the object and the transmitting end (which is also a receiving end of the reflected signal, that is, the radar) based on $\Delta f$.

$\Delta f \ll BW$. In other words, a sampling rate of an analog-to-digital converter (Analog-to-Digital Converter, ADC) of a receiver does not need to be designed based on requirements of the entire signal bandwidth BW, and only needs to be designed based on $\Delta f$. In this way, the sampling rate of the ADC can be reduced, and therefore, costs are reduced.

For example, if $T=1ms$ and $d=1km$,

$$\Delta f = \frac{BW}{T} \cdot \frac{2d}{c} = BW \cdot \frac{2}{3} \cdot 10^{-2},$$

where $\frac{2}{3} \cdot 10^{-2} \ll 1$. Therefore, FMCW-based linear frequency modulated signals (chirp signals) are commonly used in sensing.

Further, the radar may send a plurality of chirp signals continuously, and detect a velocity by shifting phases of different chirp signals, as shown in FIG. 2.

A pilot signal (which may also be referred to as a preamble signal, a preamble, a pilot, or the like) is one of common signals in communication.

A ZC sequence may be used in design of an uplink pilot. A full form of ZC is a "Zadoff-Chu" sequence, and is also referred to as a Chu sequence or a Frank-Zadoff-Chu (FZC) sequence, which is specifically:

$$x(n) = e^{-\frac{j\pi qn(n+c+2p)}{N_{ZC}}}, 0 \leq n < N_{ZC},$$

where $q$ is a root of the ZC sequence, $0 < q < N_{ZC}$, $q$ and $N_{ZC}$ are relatively prime, $c = N_{ZC} \bmod 2$, p is an integer, and $N_{ZC}$ is a length of the ZC sequence (and takes a value of a positive integer).

In a typical ZC sequence, $N_{ZC}$ is a prime number, $c = 1$, and $p = 0$, that is:

$$x(n) = e^{-\frac{j\pi qn(n+1)}{N_{ZC}}}, 0 \leq n < N_{ZC}$$

It may be understood that based on a ZC sequence, if $-N_{ZC} < q < 0$ is allowed, and $-q$ and $N_{ZC}$ are relatively prime, the ZC sequence may be alternatively written as:

$$x(n) = e^{-\frac{j\pi qn(n+c+2p)}{N_{ZC}}}, 0 \leq n < N_{ZC},$$

or

$$x(n) = e^{\frac{j\pi qn(n+c+2p)}{N_{ZC}}}, 0 \leq n < N_{ZC},$$

where $0 < q < N_{ZC}$ or $-N_{ZC} < q < 0$, $abs(q)$ and $N_{ZC}$ are relatively prime, $c = N_{ZC} \bmod 2$, p is an integer, and $N_{ZC}$ is a length of the ZC sequence (and takes a value of a positive integer). $abs(q)$ denotes a function that takes an absolute value of $q$.

When an uplink pilot is designed by using a ZC sequence, a ZC sequence may be generated in frequency domain:

$$X_q(n) = e^{-\frac{j\pi qn(n+1)}{N_{ZC}}}, 0 \leq n < N_{ZC},$$

where $N_{ZC}$ is less than or equal to a maximum prime number of a quantity N of reference signals.

Then, the N reference signals are obtained through cyclic shifting, that is:

$$\tilde{X}(n) = X_q(n \bmod N_{zc}), \ 0 \leq n < N.$$

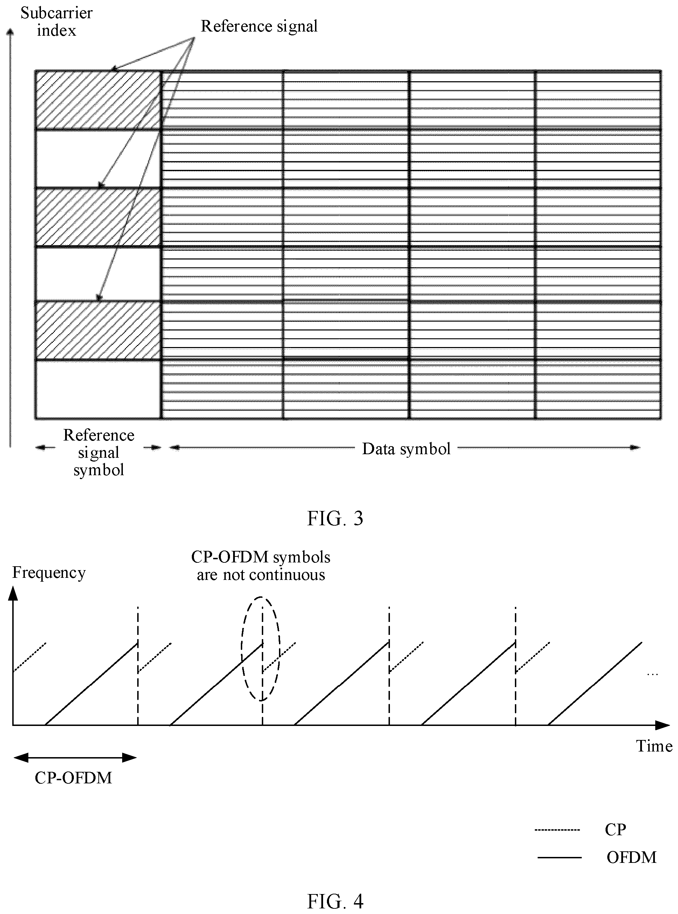

Then, the N reference signals are inserted into corresponding reference signal subcarriers, for example, as shown in FIG. 3. It should be noted that in FIG. 3, an example is used, in which a transmission bandwidth is $N_d$ subcarriers and reference signals are sent every other subcarrier, that is:

$$N = \frac{N_d}{2}.$$

Certainly, FIG. 3 is merely an example, and an actual application is not limited thereto.

Then, an inverse Fourier transform (for example, an inverse fast Fourier transform (Inverse fast Fourier transform, IFFT) or an inverse discrete Fourier transform (Inverse Discrete Fourier Transform, IDFT)) is found, to obtain a time-domain signal. Then, a cyclic prefix (Cyclic prefix, CP) is added, to form a CP-OFDM signal (that is, a pilot signal), which is transmitted by an antenna.

The pilot signal generated by using the foregoing method is approximately a chirp signal, and therefore, can be used as an FMCW signal to detect an object.

However, due to presence of CPs, a plurality of CP-OFDM symbols are not continuous, resulting in severe out-of-band interference and leakage and affecting reliability of ISAC.

It may be understood that, that OFDM symbols are not continuous in this specification means that an amplitude and/or a phase of a signal change/changes abruptly, resulting in generation of a high-frequency component, that is, causing severe out-of-band interference. As shown in FIG. 4, a frequency changes abruptly at a point at which one CP-OFDM symbol follows another. In other words, a phase changes abruptly, resulting in severe out-of-band interference.

In view of at least the foregoing factors, the technical solutions in embodiments of this application are provided, to resolve the following problem: how to generate a pilot signal, so that CP-OFDM symbols are continuous, so as to ensure low out-of-band interference and leakage and improve reliability of ISAC.

It may be understood that communication signals in embodiments of this application include but are not limited to pilot signals, and actually may alternatively be other forms of communication signals. For ease of description, an example in which the communication signals are the pilot signals is used in embodiments of this application.

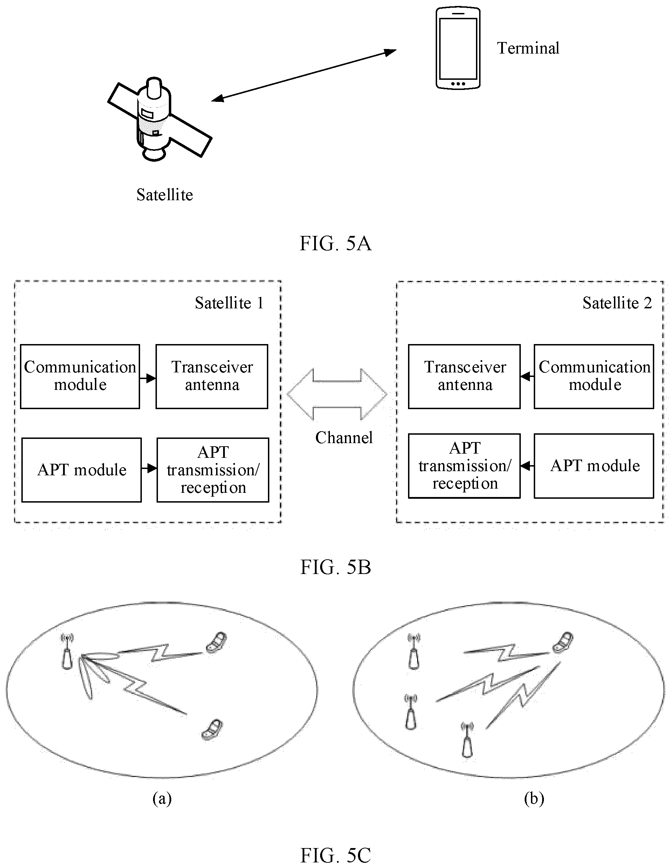

For example, refer to FIG. 5A. Embodiments of this application may be used in a system for communication between a satellite and a terminal, and the system includes a satellite and a terminal-type network element. The satellite provides a communication service for a terminal device. The terminal device includes but is not limited to a device such as a smartphone, a smartwatch, or a tablet computer. The satellite transmits downlink data to the terminal, and the terminal transmits uplink data to the satellite.

For example, refer to FIG. 5B. Embodiments of this application may be used in a system for communication between satellites. A conventional inter-satellite link communication system may be divided into two parts: an acquisition, tracking, and pointing (Acquisition, Tracking, and Pointing, APT) subsystem and a communication subsystem. The communication subsystem is responsible for inter-satellite information transmission, and is a main part of the inter-satellite communication system. The APT subsystem is responsible for acquisition, pointing, and tracking between satellites. Acquisition means determining a direction of arrival of an incident signal, pointing means adjusting a transmit wave to aim at a receiving direction, and tracking means continuously adjusting pointing and acquisition in an entire communication process.

For example, refer to FIG. 5C. Embodiments of this application may be used in a wireless communication system such as cellular communication or wireless local area network communication. In the cellular communication system, one network device may provide a service for a plurality of terminals, and one terminal may also communicate with a plurality of network devices. In the wireless local area network communication system, one access point may serve a plurality of terminals, and one terminal may also communicate with a plurality of access points.

The network device is an apparatus that is deployed in a radio access network or a wireless local area network and that provides a wireless communication function for the terminal device. The network device may include various forms of macro base stations, micro base stations (also referred to as small cells), relay stations, access points, and the like. In systems using different radio access technologies, names of the network device may be different. Alternatively, the network device may be a radio controller in a CRAN (Cloud Radio Access Network, cloud radio access network) scenario. Alternatively, the network device may be a base station device in a future 5G network or a network device in a future evolved PLMN network. Alternatively, the network device may be a wearable device or a vehicle-mounted device. Alternatively, the network device may be a transmission and reception point (Transmission and Reception Point, TRP). Alternatively, the network device may be an access point (access point, AP).

In addition, the terminal in this specification may also be referred to as a terminal device. The terminal may include various handheld devices, vehicle-mounted devices, wearable devices, or computing devices that have a wireless communication function, or other processing devices connected to a wireless modem. The terminal may be a mobile station (Mobile Station, MS), a subscriber unit (subscriber unit), a cellular phone (cellular phone), a smartphone (smartphone), a wireless data card, a personal digital assistant (Personal Digital Assistant, PDA for short) computer, a tablet computer, a wireless modem (modem), a handheld device (handset), a laptop computer (laptop computer), a machine type communication (Machine Type Communication, MTC) terminal, or the like.

It should be understood that the foregoing several communication systems are merely examples. During actual application, embodiments of this application may also be used in other communication systems.

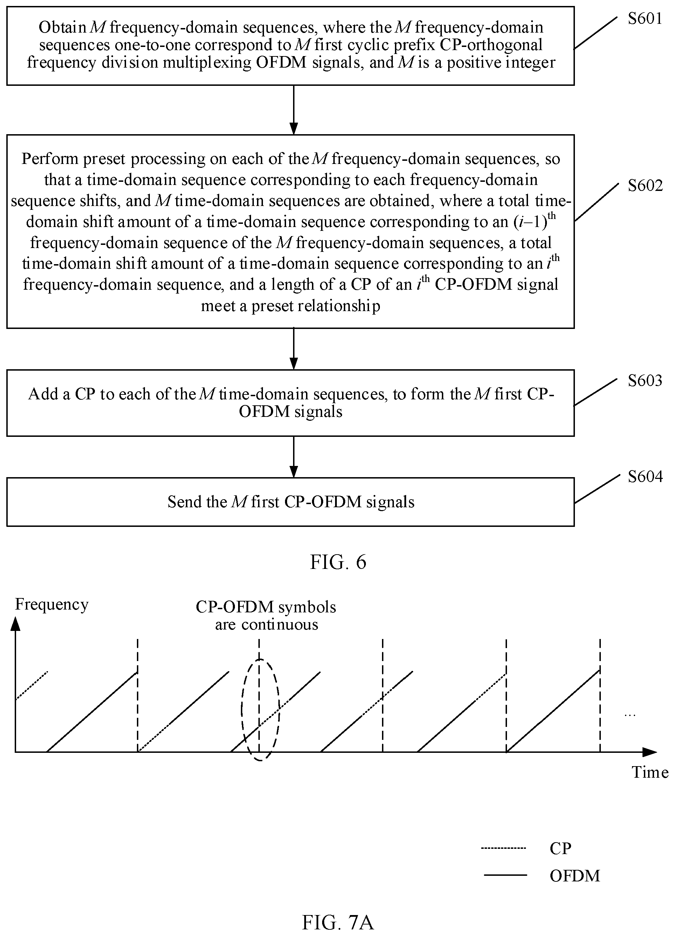

FIG. 6 is a flowchart of a signal transmission method according to an embodiment of this application. The method may be used on any device (for example, a satellite, a base station, a terminal, or an access point) in any of the foregoing communication systems. The method includes the following steps.

S601: Obtain $M$ frequency-domain sequences, where the $M$ frequency-domain sequences one-to-one correspond to $M$ first cyclic prefix CP-orthogonal frequency division multiplexing OFDM signals, and $M$ is a positive integer.

$m$ sequences of the $M$ frequency-domain sequences are the same, and $m$ is an integer less than or equal to $M$ and greater than or equal to 0. In other words, when $M$ is greater than 1, some of the plurality of frequency-domain sequences may be the same (in other words, some of the frequency-domain sequences are different), or all of the frequency-domain sequences may be the same, or all of the frequency-domain sequences may be different.

In a possible implementation, an $i^{th}$ frequency-domain sequence $X_i(k)$ may be generated based on a frequency-domain ZC sequence $X(k)$. The frequency-domain ZC sequence $X(k)$ is, for example, as follows:

$$X(k) = \mathrm{e}^{-\frac{j\pi qk(k+c+2p)}{N_{ZC}}}, 0 \le k < N_{ZC},$$

where $k$ is an index of the sequence $X(k)$, q is a root of the shown frequency-domain ZC sequence, $0 < |q| < N_{ZC}$, q and $N_{ZC}$ are relatively prime, $N_{ZC}$ is a length of the frequency-domain ZC sequence and is a positive integer, $c = N \bmod 2$, and $p$ is an integer.

In another possible implementation, an $i^{th}$ frequency-domain sequence $\overline{X}_i(k)$ may be generated based on a time-domain ZC sequence $x(n)$. The time-domain ZC sequence $x(n)$ is, for example, as follows:

$$x(n) = \mathrm{e}^{-\frac{j\pi qn(n+c+2p)}{N_{ZC}}}, \ 0 \le n < N_{ZC},$$

where $q$ is a root of the time-domain ZC sequence, $0 < |q| < N_{ZC}$, q and $N_{ZC}$ are relatively prime, $N_{ZC}$ is a length of the time-domain ZC sequence and is a positive integer, $c = N \bmod 2$, $p$ is an integer, and $n$ is an index of the sequence $x(n)$.

In a possible example, a process of generating the $i^{th}$ frequency-domain sequence $\overline{X}_i(k)$ based on the time-domain ZC sequence $x(n)$ may include the following steps.

First, $N_{ZC}$ time-domain extended ZC sequences are generated:

$$x(n) = e^{-\frac{j\pi qn(n+c+2p)}{N_{ZC}}}, 0 \le n < N_{ZC},$$

where $n$ is an index of the sequence $x(n)$.

Then, cyclic shifting is performed on $x(n)$:

$$\tilde{x}(n) = x(n \bmod N), 0 \le n < N_{ZC},$$

where $n$ is an index of the sequence $\tilde{x}(n)$, and $a$ is an integer.

Finally, a Fourier transform of $\tilde{x}(n)$ is found, to obtain a frequency-domain sequence:

$$X(k) = \sum_{n=0}^{N_{ZC}-1} \tilde{x}(n)e^{\frac{-j2\pi kn}{N_{ZC}}}, 0 \le k < N_{ZC},$$

where $k$ is an index of the sequence $X(k)$.

It may be understood that the $M$ frequency-domain sequences are eventually modulated into time-domain signals, which are respectively borne on $M$ first CP-OFDM symbols, and in this way, the $M$ first CP-OFDM signals are formed and to be sent out. Therefore, the $M$ frequency-domain sequences one-to-one correspond to the $M$ first CP-OFDM signals, which may also be described as that the $M$ frequency-domain sequences one-to-one correspond to the $M$ first CP-OFDM symbols.

S602: Perform preset processing on each of the $M$ frequency-domain sequences, so that a time-domain sequence corresponding to each frequency-domain sequence shifts, and $M$ time-domain sequences are obtained, where a time-domain shift amount $\Delta_{i-1}$ of a time-domain sequence corresponding to an $(i-1)^{th}$ frequency-domain sequence of the $M$ frequency-domain sequences, a total time-domain shift amount $\Delta_i$ of a time-domain sequence corresponding to an $i^{th}$ frequency-domain sequence, and a length $L_i$ of a CP of an $i^{th}$ CP-OFDM signal meet a preset relationship.

It may be understood that in this embodiment of this application, the $M$ frequency-domain sequences may be numbered from 0, and correspondingly, a value range of $i$ in $\Delta_i$ is 0 to $M$-1 and $i$ is a positive integer. For example, $M$ is equal to 3. In this case, the $M$ frequency-domain sequences include a $0^{th}$ frequency-domain sequence, a $1^{st}$ frequency-domain sequence, and a $2^{nd}$ frequency-domain sequence sequentially.

Alternatively, the $M$ frequency-domain sequences may be numbered from 1, and correspondingly, a value range of $i$ in $\Delta_i$ is 1 to $M$ and $i$ is a positive integer. For example, $M$ is equal to 3. In this case, the $M$ frequency-domain sequences include a $1^{st}$ frequency-domain sequence, a $2^{nd}$ frequency-domain sequence, and a $3^{rd}$ frequency-domain sequence sequentially.

Certainly, during actual application, the $M$ frequency-domain sequences may be alternatively numbered from another value. This is not limited in this application.

For ease of description, the following mainly uses an example for description, in which the $M$ frequency-domain sequences are numbered from 0.

In this embodiment of this application, the preset processing includes but is not limited to one or more of the following.

(1) Frequency-domain shifting

Frequency-domain shifting means to shift a frequency-domain sequence in frequency domain. Frequency-domain shifting is performed on a frequency-domain sequence, and then an inverse Fourier transform of a frequency-domain sequence that is obtained after frequency-domain shifting is performed is found, to obtain a time-domain sequence. The time-domain sequence shifts in time domain, when being compared with a time-domain sequence that is obtained by directly finding an inverse Fourier transform of the original frequency-domain sequence. Therefore, shifting in frequency domain can implement a time-domain shift.

During specific implementation, cyclic shifting is performed on the $i^{th}$ frequency-domain sequence $\overline{X}_i(k)$ of the $M$ frequency-domain sequences. Frequency-domain shifting may be implemented through cyclic shifting. For example, if $N_{ZC} < N$, $X(k)$ is cyclically extended to $N$; or if $N_{ZC} > N$, $X(k)$ is truncated to $N$:

$$\tilde{X}_i(k) = X((k + \alpha_i)\, Mod\, N), 0 \le k < N,$$

where $\tilde{X}_i(k)$ represents a frequency-domain sequence that is obtained after cyclic shifting is performed on the $i^{th}$ frequency-domain sequence $X_i(k)$, $\alpha_i$ is a frequency-domain shift amount, and N is a quantity of reference signals, is also a length of the sequence $\tilde{X}_i(k)$, and is also a quantity of subcarriers to which $\overline{X}_i(k)$ is mapped.

A time-domain shift amount caused by the frequency-domain shift amount $\alpha_i$ may be expressed as $\dfrac{\alpha_i L}{N_{ZC}}$, where $L$ is a length (or a size, or a quantity of points) of an inverse Fourier transform, and $N_{ZC}$ is a length of the sequence $X_i(k)$.

It should be noted that the frequency-domain shift amount $\alpha_i$ may be 0. When the frequency-domain shift amount $\alpha_i$ is 0, it is equivalent to not performing frequency-domain shifting on the frequency-domain sequence.

(2) Phase shifting

Phase shifting means to shift a phase of a frequency-domain sequence. Phase shifting is performed on a frequency-domain sequence, and then an inverse Fourier transform of a frequency-domain sequence that is obtained after phase shifting is performed is found, to obtain a time-domain sequence. The time-domain sequence shifts in time domain, when being compared with a time-domain sequence that is obtained by directly finding an inverse Fourier transform of the original frequency-domain sequence. Therefore, shifting a phase can also implement a time-domain shift.

For example, phase shifting is performed on the $i^{th}$ frequency-domain sequence $\overline{X}_i(k)$ of the M frequency-domain sequences, which may be expressed as:

$$\overline{X}_i(k) = X_i(k)e^{j2\pi\beta_i k}, 0 \le k < N,$$

where $\beta_i$ is a phase shift amount, and $\beta_i$ is a real number.

A time-domain shift amount caused by the phase shift amount $\beta_i$ may be expressed as $L\beta_i$, where $L$ is a length (or a size, or a quantity of points) of an inverse Fourier transform, and is also a length of a time-domain sequence that is obtained by finding the inverse Fourier transform.

During actual application, phase shifting may be alternatively performed on a frequency-domain sequence that is obtained after frequency-domain shifting is performed. For example:

$$\bar{X}_i(k) = \tilde{X}_i(k)e^{j2\pi\beta_i k}, 0 \leq k < N.$$

It should be noted that the phase shift amount $\beta_i$ may be 0. When the phase shift amount $\beta_i$ is 0, it is equivalent to not performing phase shifting on the frequency-domain sequence.

In a possible case, when there are a plurality of antenna ports, to ensure that signals sent by the antenna ports are orthogonal to each other (which is referred to as that the antenna ports are orthogonal to each other for short), phase shifting needs to be performed on the $i^{th}$ frequency-domain sequence. For ease of description, a phase shift amount introduced due to consideration of an orthogonality factor between the antenna ports is described herein as a phase shift amount generated by an antenna port for a signal in the $i^{th}$ frequency-domain sequence $X_i(k)$, and is denoted by $\gamma_i$. $\gamma_i$ is a real number. When there are a plurality of antenna ports, different antenna ports may correspond to different $\gamma_i$ values, respectively, to ensure that signals sent by the ports are orthogonal to each other. Assuming that the signal in the $i^{th}$ frequency-domain sequence is sent by an antenna port $v$, when $v$ takes a different value, $\gamma_i$ may be different.

It may be understood that $\beta_i$ may include $\gamma_i$. When $\gamma_i$ is not 0, whether the preset relationship is met when $\beta_i=\gamma_i$ may be first considered. If the preset relationship is met, an additional phase shift amount may not be added. If the preset relationship is not met, an additional phase shift amount may be added, that is, $\beta_i > \gamma_i$. For example, $\beta_i = \gamma_i + w_i$, where $w_i$ is the additional phase shift amount, so that the preset relationship can be met.

In some cases, $\gamma_i$ may take a value of 0. For example, a quantity of the antenna ports is 1; or for example, the phase shift amount introduced due to the orthogonality factor between the antenna ports is not considered; or for example, a phase shift amount generated by an antenna port v that sends the signal in the $i^{th}$ frequency-domain sequence is exactly 0, while a phase shift amount generated by another antenna port is not 0, which can also meet that the antenna ports are orthogonal to each other; or the like.

(3) Time-domain shifting

It may be understood that time-domain shifting is an operation of shifting a time-domain sequence in time domain, where the time-domain sequence is obtained by finding an inverse Fourier transform of a frequency-domain sequence. The operation can directly implement a time-domain shift.

For example, a frequency-domain sequence (it may be understood that the frequency-domain sequence herein may be an original frequency-domain sequence $X(k)$, or may be a frequency-domain sequence that is obtained after frequency-domain shifting and/or phase shifting is performed, which is not limited) is first mapped to $N$ subcarriers by using a map function $f(l)$, $l \in \Phi$, and an inverse Fourier transform is found and time-domain shifting is performed for $L$ points, to obtain a time-domain signal $r_i(t) = \Sigma_{l\in\Phi} W_i(l) \cdot \bar{X}_i(f(l))e^{j2\pi l\Delta(t-L_iTc-ts,i-O_iTc)}$ where $T_c$ is a unit time, $T_c = \dfrac{1}{\Delta f L}$, $\Delta f$ is a subcarrier width, $L_i$ is the length of the CP of the $i^{th}$ CP-OFDM signal, $L_i$ is an integer, $t_{s,i}$ is a starting time of the $i^{th}$ CP-OFDM signal, $t_{e,i}$ is an ending time of the $i^{th}$ CP-OFDM signal, duration of the $i^{th}$ CP-OFDM signal is $t_{e,i} - t_{s,i} = (L_i + L)T_c$, a value range of $t$ is $[t_{s,i}, t_{e,i}]$, $0 \leq f(l) < N$, $\Phi$ is a set of reference signal subcarriers, $W_i(l)$ is a weighting coefficient for an $l^{th}$ subcarrier, $f(l)$ is an index of $\bar{X}_i(k)$ corresponding to the $l^{th}$ subcarrier, $O_i$ is a time-domain shift amount, and $O_i$ is a real number.

It should be noted that the time-domain shift amount $O_i$ may be 0. When the time-domain shift amount $O_i$ is 0, it is equivalent to not performing time-domain shifting on the time-domain sequence.

It may be understood that the three operations may separately form an embodiment, or may be combined with each other to form an embodiment.

For example, when the three processing manners are all implemented, a processing procedure may include:

performing cyclic shifting on the $i^{th}$ frequency-domain sequence $X_i(k)$ of the $M$ frequency-domain sequences, so that a signal in the $i^{th}$ frequency-domain sequence $X_i(k)$ shifts in frequency domain, and a second frequency-domain sequence $\tilde{X}_i(k) = X((k + \alpha_i) \ Mod \ N)$ is obtained, where $\alpha_i$ is a frequency-domain shift amount, and $N$ is a quantity of reference signals and is also a length of the second frequency-domain sequence;

performing phase shifting on the second frequency-domain sequence $\tilde{X}_i(k)$, so that a phase of a signal in the $i^{th}$ frequency-domain sequence $X_i(k)$ shifts, and a third frequency-domain sequence $\bar{X}_i(k) = \tilde{X}_i(k)e^{j2\pi\beta_i k}$ is obtained, where $\beta_i$ is a phase shift amount, and $\beta_i$ is a real number; and

mapping the third frequency-domain sequence $\bar{X}_i(k)$ to $N$ subcarriers by using a map function $f(l)$, $l \in \Phi$, and finding an

inverse Fourier transform and performing time-domain shifting for $L$ points, to obtain a first time-domain signal $r_i(t) = \Sigma_{l \in \Phi} W_i(l) \cdot \overline{X}_i(f(l)) e^{j2\pi l \Delta f(t - L_i Tc - ts, i - O_i Tc)}$, where $T_c$ is a unit time, $T_c = \dfrac{1}{\Delta f L}$, $\Delta f$ is a subcarrier width, $L_i$ is the length of the CP of the $i$th CP-OFDM signal, $L_i$ is an integer, $t_{s,i}$ is a starting time of the $i$th CP-OFDM signal, $t_{e,i}$ is an ending time of the $i$th CP-OFDM signal, duration of the $i$th CP-OFDM signal is $t_{e,i} - t_{s,i} = (L_i + L)T_c$, a value range of $t$ is $[t_{s,i}, t_{e,i}]$, $0 \le f(l) < N$, $\Phi$ is a set of reference signal subcarriers, $W_i(l)$ is a weighting coefficient for an $l$th subcarrier, $f(l)$ is an index of $\overline{X}_i(k)$ corresponding to the $l$th subcarrier, $O_i$ is a time-domain shift amount, and $O_i$ is a real number.

The first time-domain signal may be alternatively represented by a digital discrete time-domain signal, for example:

$$r_i(n) = \sum_{l \in \Phi} W_i(l) \cdot \overline{X}_i\big(f(l)\big) e^{\frac{j2\pi}{L}(n + O_i)l},$$

where $n \in \{0, \dots, L-1\}$ and is an integer, $f(l)$ is an index of a sequence $\overline{X}_i^p(k)$ corresponding to an $l$th subcarrier, $\Phi$ is a set of reference signal subcarriers, and $W_i(l)$ is a weighting coefficient for the $l$th subcarrier.

In a possible design, a value of the set of reference signal subcarriers $\Phi$ may be configured by a network device, or may be related to a user terminal identifier (ID).

In a possible example, $f(l) = l - l_0$, and $\Phi = \{l_0, \dots, l_0 + N - 1\}$, where $l_0$ is an integer. When the first time-domain signal is represented by an analog continuous time-domain signal, $l_0 \ge 0$, which helps express an index of a subcarrier. When the first time-domain signal is represented by a digital discrete time-domain signal, because $e^{\frac{j2\pi}{L}nl} = e^{\frac{j2\pi}{L}n(l + vL)}$, with $v$ being an arbitrary integer and representing an index of an antenna port, $l_0$ may be a negative integer, 0, or a positive integer. Optionally, for ease of digital signal processing, $L$ may be constrained to be an even number, so that the sequence $\overline{X}_i(k)$ is continuously mapped to a subcarrier interval $\left[-\dfrac{L}{2}, \dfrac{L}{2}\right)$ or $\left(-\dfrac{L}{2}, \dfrac{L}{2}\right]$. Therefore, the following constraints may be further set: $l_0 + N - 1 \le \dfrac{L}{2}$ or $\dfrac{L}{2} - 1$, and $l_0 \ge -\dfrac{L}{2}$ or $-\dfrac{L}{2} + 1$.

In a possible design, the preset relationship may include:

$$\Delta_i - \Delta_{i-1} = L_i + \tilde{c}_i L \qquad\qquad\qquad \text{formula (1)}$$

where $\tilde{c}_i$ is an integer, $i$ is a positive integer less than $M$, and $L$ is the length of the time-domain sequence corresponding to each frequency-domain sequence (the time-domain sequences corresponding to the frequency-domain sequences are of the same length). In other words, a difference between the time-domain shift amount $\Delta_{i-1}$ of the time-domain sequence corresponding to the $(i-1)$th frequency-domain sequence and the total time-domain shift amount $\Delta_i$ of the time-domain sequence corresponding to the $i$th frequency-domain sequence is $L_i + \tilde{c}_i L$.

It may be understood that due to cyclic shifting, the time-domain sequence is shifted by a length of $\tilde{c}_i L$, and shifts corresponding to all the integers $\tilde{c}_i$ are equivalent. Usually, $\tilde{c}_i L$ may be 0. To be specific, the preset relationship may include: $\Delta_i - \Delta_{i-1} = L_i$.

In a possible design, the total time-domain shift amount of the time-domain sequence corresponding to the $i$th frequency-domain sequence may be expressed as:

$$\Delta_i = L\beta_i - O_i - \gamma_i L + \frac{\alpha_i L}{N_{ZC}};$$

the total time-domain shift amount of the time-domain sequence corresponding to the $(i-1)$th frequency-domain sequence may be expressed as:

$$\Delta_{i-1} = L\beta_{i-1} - O_{i-1} - \gamma_{i-1} L + \frac{\alpha_{-1i} L}{N_{ZC}}; \text{ and}$$

correspondingly, the formula (1) may be alternatively expressed as:

$$L\beta_i - O_i - L\gamma_i + \frac{\alpha_i L}{N_{ZC}} - (L\beta_{i-1} - O_{i-1} - L\gamma_{i-1} + \frac{\alpha_{-1i} L}{N_{ZC}}) = L_i + \tilde{c}_i L \qquad \text{formula (2)}$$

where $\gamma_i$ is a phase shift amount generated by an antenna port for the signal in the $i^{th}$ frequency-domain sequence $X_i(k)$, and $\gamma_i$ is a real number.

Optionally, $\gamma_i = \frac{m}{m_0}$, where $m$ and $m_0$ are integers. Further, optionally, $m \in [0, m_0 - 1]$, and a value of $m_0$ is an integer multiple of 6 or 8, for example, 6, 8, or 12. During specific implementation, values of m and $m_0$ may be configured by a network device, or may be related to one or more of the following: an index v of an antenna port, a total quantity $N_v$ of antenna ports, a symbol index $i,$ a user terminal identifier (ID), or the like.

It may be understood that during actual application, the formulas (1) and (2) may alternatively have other variants.

For example, after transposition is performed on the formula (2), the formula (2) may change to:

$$\beta_i - \frac{O_i}{L} - (\beta_{i-1} - \frac{O_{i-1}}{L}) = \frac{L_i}{L} + +L\gamma_i - \frac{\alpha_i}{N_{ZC}} - \left(L\gamma_{i-1} - \frac{\alpha_{i-1}}{N_{ZC}}\right) + \tilde{c}_i \qquad \text{formula (3)}$$

For example, based on that $e^{j2\pi\tilde{c}ik} = 1$, alternatively, the formula (2) may be equivalently expressed as:

$$\beta_i - \frac{O_i}{L} = \tilde{\beta}_i + L\gamma_i - \frac{\alpha_i}{N_{ZC}} + \tilde{c}_i, 0 \le i < N_S, \tilde{\beta}_i = \tilde{\beta}_{i-1} + \frac{L_i}{L}, 1 \le i < N_S \quad \text{formula (4)}$$

It may be understood that the formulas (2), (3), (4), and the like are merely a few possible examples. During actual application, the formula (1) may alternatively have other variants. Examples are not listed one by one in this application.

In a possible design, $O_0 = 0$ (indicates that time-domain shifting is not performed). In this case, $O_i = 0$, *and* $\beta_i = i\frac{L_{CP}}{L} + \gamma_i$. Optionally, $\alpha_i = 0$. *Optionally, p = 0*. Optionally, $\tilde{\beta}_i = i\frac{L_{CP}}{L}$. Optionally, $L_i = L_{CP}$, where $L_{CP}$ is a preset value. When $i$ takes different values, $L_i$ is always $L_{CP}$.

In this design, $O_i$ is set to 0, and then values of the other parameters such as the phase shift amount $\beta_i$ are determined, so that $\Delta_{i-1}$, $\Delta_i$, and $L_i$ can meet the preset relationship, and further the CP-OFDM symbols are continuous, reducing complexity of implementation.

In a possible design, $\beta_i = \gamma_i$ (indicates that phase shifting performed on the frequency-domain sequence includes only phase shifting performed by an antenna port). In this case, $\beta_i = \gamma_i$, *and* $O_i = -iL_{CP}\gamma_i$. Optionally, $\alpha_i = 0$. Optionally, $\tilde{\beta}_i = i\frac{L_{CP}}{L}$. Optionally, $p = 0$. Optionally, $L_i = L_{CP}$, where $L_{CP}$ is a preset value. When $i$ takes different values, $L_i$ is always $L_{CP}$.

In this design, it is set that $\beta_i = \gamma_i$, and then values of the other parameters such as the time-domain shift amount $O_i$ and the frequency-domain shift amount $\alpha_i$ are determined, so that $\Delta_{i-1}$, $\Delta_i$, and $L_i$ can meet the preset relationship, and further the CP-OFDM symbols are continuous, reducing complexity of implementation.

Certainly, the two designs are merely examples. Actually, there may alternatively be other parameter designs.

It may be understood that a value of $\tilde{\beta}_0$ or values of $\beta_0$ and $O_0$ determines or determine an initial frequency of a 0th CP-OFDM signal. Therefore, the initial frequency of the 0th CP-OFDM signal may be constrained by constraining the value of $\tilde{\beta}_0$ or the values of $\beta_0$ and $O_0$.

In a possible design, to further reduce complexity of implementation, $\beta_i L_\beta$ and $L_\beta$ may be constrained to be positive integers.

For example:

$$\beta_i L_\beta = \left\lceil \frac{\Delta_{i-1} + L_i + \tilde{c}_i L + O_i - \gamma_i + \frac{\alpha_i L}{N_{ZC}}}{\frac{L}{L_\beta}} \right\rceil.$$

, or

$$\beta_i L_\beta = \left\lceil \frac{\Delta_{i-1} + L_i + \tilde{c}_i L + O_i - \gamma_i + \frac{\alpha_i L}{N_{ZC}}}{\frac{L}{L_\beta}} \right\rceil,$$

where "⌈ ⌉" indicates rounding up to a nearest integer, and "⌊ ⌋" indicates rounding down to a nearest integer.

It may be understood that, based on that the formula (2) may be equivalently transformed into the formula (4), that $\beta_i L_\beta$ is a positive integer herein may also be replaced with that $\tilde{\beta}_i L_\beta$ is a positive integer.

In a possible design, the initial frequency of the $0^{th}$ CP-OFDM signal may be constrained to be a maximum frequency or a minimum frequency.

For example, $\alpha_i = 0$, $p = 0$, $O_i = 0$, $L_i = L_{CP}$, $\tilde{\beta}_i = (i + 1)\frac{L_{CP}}{L}$, and $\beta_i = (i + 1)\frac{L_{CP}}{L} + \gamma_i$, where $L_{CP}$ is a preset value. Correspondingly, $\alpha_0 = 0$, $O_0 = 0$, and $\beta_0 = 1\frac{L_{CP}}{L} + \gamma_i$.

For example, $\alpha_i = 0$, $p = 0$, $\beta_i = \gamma_i$, $L_i = L_{CP}$, $\tilde{\beta}_i = (i + 1)\frac{L_{CP}}{L}$, and $O_i = -(i + 1)L_{CP}$, where $L_{CP}$ is a preset value. Correspondingly, $\alpha_0 = 0$, $\beta_0 = \gamma_0$, and $O_0 = -L_{CP}$.

The initial frequency of the $0^{th}$ CP-OFDM signal is designed to be the maximum frequency or the minimum frequency. Therefore, a larger quantity of complete chirp signals can be generated in a same quantity of CP-OFDM cycles, further improving performance of ISAC.

In a possible design, based on the foregoing descriptions, $\beta_0 L = L_0 - \frac{qpL}{N_{ZC}} + \gamma_0 L - \frac{\alpha_0 L}{N_{ZC}} + O_i + c_0 L$.

In a possible design, $\beta_0 L_\beta$ is a positive integer, and $L_\beta$ is a positive integer.

That $\beta_0 L_\beta$ is a positive integer is specifically, for example:

$$\beta_0 L_\beta = \left\lceil \frac{L_0 - \frac{qpL}{N_{ZC}} + \gamma_0 L - \frac{\alpha_0 L}{N_{ZC}} + O_i + c_0 L}{\frac{L}{L_\beta}} \right\rceil,$$

, or

$$\beta_0 L_\beta = \left\lceil \frac{L_0 - \frac{qpL}{N_{ZC}} + \gamma_0 L - \frac{\alpha_0 L}{N_{ZC}} + O_i + c_0 L}{L/L_\beta} \right\rceil.$$

In this design, $\beta_0 L_\beta$ is constrained to be a positive integer, further reducing complexity of implementation.

Optionally, based on a size of a resource block (resource block, RB) (1 RB = 12 resource elements (Resource Elements, REs), where 12 is an integer multiple of 2 and 3) and a data scheduling bandwidth (for a single-carrier waveform, the data scheduling bandwidth is x REs, where x is an integer multiple of 2, 3, or 5), a value of $L_\beta$ in this embodiment of this application may be a multiple of at least one of 2, 3, or 5. Certainly, 2, 3, and 5 are merely examples. A possibility that $L_\beta$ is another value is not limited in this application.

S603: Add a CP to each of the $M$ time-domain sequences, to form the $M$ first CP-OFDM signals.

For example, after processing in S602 is performed, the time-domain shift amount of the time-domain sequence corresponding to the $(i-1)^{th}$ frequency-domain sequence is $\Delta_{i-1}$, the total time-domain shift amount of the time-domain sequence corresponding to the $i^{th}$ frequency-domain sequence is $\Delta_i$, and the difference between the two is $L_i + \tilde{c}_i L$. Therefore, a time-domain position with a length of $L_i + \tilde{c}_i L$ is reserved between the time-domain sequence corresponding to the $(i-1)^{th}$ frequency-domain sequence and the time-domain sequence corresponding to the $i^{th}$ frequency-domain sequence. After a CP with a length of $L_i$ is added to the reserved time-domain position, the $i^{th}$ CP-OFDM signal is formed.

S604: Send the $M$ first CP-OFDM signals.

When the $M$ first CP-OFDM signals are sent in accordance with the foregoing procedure, frequencies of the $M$ first CP-OFDM signals can change continuously, that is, the CP-OFDM symbols corresponding to the $M$ first CP-OFDM signals are continuous.

For example, FIG. 7A is a diagram of implementing, by adjusting $\beta_i$ *and* $O_i$, that CP-OFDM symbols are continuous. A frequency does not change abruptly at a point at which one CP-OFDM symbol follows another, and a phase does not change abruptly either. Therefore, no out-of-band interference is caused.

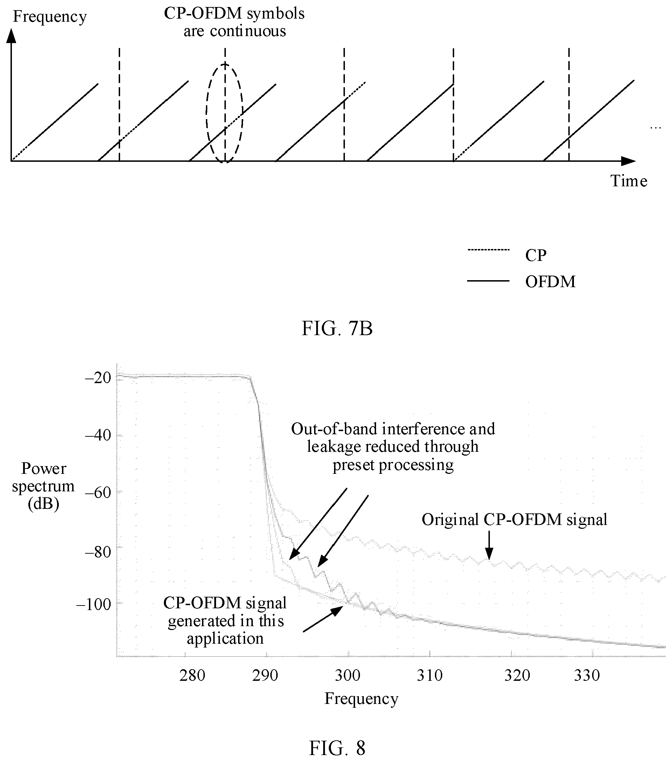

For example, FIG. 7B is a diagram of implementing, by adjusting $\tilde{\beta}_0$ or adjusting $\beta_0$ *and* $O_0$, that the initial frequency of the $0^{th}$ CP-OFDM signal is the minimum frequency. When FIG. 7B is compared with FIG. 7A, it can be learned that a larger quantity of complete chirp signals can be generated in a same quantity of CP-OFDM cycles.

According to the foregoing solutions, the preset processing (for example, one or more of frequency-domain shifting, phase shifting, time-domain shifting, or the like) is performed on the frequency-domain sequences, so that total time-domain shift amounts of time-domain sequences corresponding to two adjacent frequency-domain sequences, and a length of a CP can meet the preset relationship, and further adjacent CP-OFDM symbols are continuous, reducing or even avoiding out-of-band interference and leakage, and improving reliability of ISAC.

For a purpose of better describing technical effects of the foregoing solutions, a set of experimental data is provided herein:

$$q = 3, N_{ZC} = N = 256, L = 2048, L_i = L_{CP} = 256, \text{and } \gamma_i = 0;$$

$$O_i = 0, \tilde{\beta}_i = i\frac{256}{2048}, \text{and } \beta_i = i\frac{256}{2048};$$

and

$$\beta_i = 0, \tilde{\beta}_i = i\frac{256}{2048}, \text{and } O_i = -i \cdot 256.$$

It may be understood that values of $\tilde{\beta}_0(\beta_0)$ *and* $O_0$ do not affect out-of-band leakage.

FIG. 8 is a diagram of a comparison of an original CP-OFDM signal (a signal shown in FIG. 4) and a CP-OFDM signal that is generated based on the foregoing parameters and by using the method in this embodiment of this application. It can be learned from FIG. 8 that for the CP-OFDM signal generated by using the solutions in this application, out-of-band interference and leakage are effectively reduced.

In a possible design, after the M first CP-OFDM signals are sent, $M$ second CP-OFDM signals may be further received, where the M second CP-OFDM signals are signals that are obtained after the $M$ first CP-OFDM signals are transmitted over a channel; and then a distance to and/or a velocity of a target are/is determined based on the $M$ first CP-OFDM signals and the $M$ second CP-OFDM signals. In this way, the distance to and/or the velocity of the target can be sensed based on the CP-OFDM signals.

In a possible design, the first CP-OFDM signal is a pilot signal. To be specific, the pilot signal may be generated by using the foregoing method, so that any two adjacent CP-OFDM signals in the pilot signal are continuous. In this way, performance of ISAC that is implemented based on the pilot signal can be improved.

Based on a same technical concept, an embodiment of this application provides a communication apparatus 900. The apparatus 900 may be, for example, a satellite, a base station, a terminal, an access point, or a chip inside a satellite, a base station, a terminal, or an access point. The apparatus 900 includes corresponding modules, units, or means (means) for performing the method steps in the embodiment shown in FIG. 6. The functions, units, or means may be implemented by software, may be implemented by hardware, or may be implemented by hardware executing corresponding software.

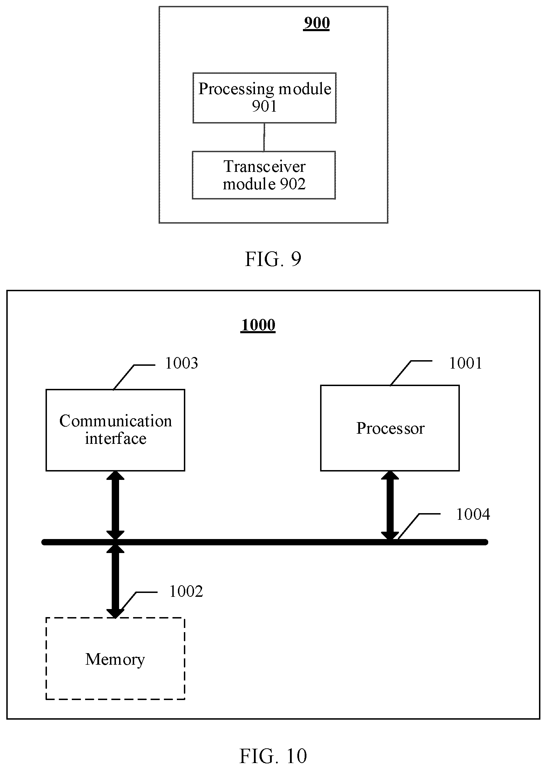

For example, with reference to FIG. 9, the apparatus 900 may include a processing module 901 and a transceiver module 902.

The processing module 901 is configured to: obtain $M$ frequency-domain sequences, where the $M$ frequency-domain sequences one-to-one correspond to $M$ first cyclic prefix CP-orthogonal frequency division multiplexing OFDM signals, $M$ is a positive integer, $m$ sequences of the $M$ frequency-domain sequences are the same, and $m$ is an integer less than or equal to $M$ and greater than or equal to 0; perform preset processing on each of the $M$ frequency-domain sequences, so that a time-domain sequence corresponding to each frequency-domain sequence shifts, and $M$ time-domain sequences are obtained, where a time-domain shift amount $\Delta_{i-1}$ of a time-domain sequence corresponding to an ($i$ - 1)$^{th}$ frequency-domain sequence of the $M$ frequency-domain sequences, a total time-domain shift amount $\Delta_i$ of a time-domain sequence corresponding to an $i^{th}$ frequency-domain sequence, and a length $L_i$ of a CP of an $i^{th}$ CP-OFDM signal meet a preset relationship; and add a CP to each of the $M$ time-domain sequences, to form the $M$ first CP-OFDM signals.

The transceiver module 902 is configured to send the M *first* CP-OFDM signals.

It should be understood that all related content of the steps in the foregoing method embodiments may be cited as function descriptions of corresponding functional modules. Details are not described herein again.

Based on a same technical concept, as shown in FIG. 10, an embodiment of this application further provides a communication apparatus 1000. The communication apparatus 1000 includes:

at least one processor 1001 and a communication interface 1003 that is connected to the at least one processor 1001 in a communication manner, where the at least one processor 1001 executes instructions stored in a memory 1002, to enable the apparatus to perform, through the communication interface 1003, the method steps performed by the network device in the embodiment shown in FIG. 6.

Optionally, the memory 1002 is located outside the apparatus 1000.

Optionally, the apparatus 1000 includes the memory 1002. The memory 1002 is connected to the at least one processor 1001, and the memory 1002 stores the instruction that can be executed by the at least one processor 1001. In FIG. 10, a dashed line indicates that the memory 1002 is optional for the apparatus 1000.

The processor 1001 and the memory 1002 may be coupled through an interface circuit, or may be integrated together. This is not limited herein.

A specific connection medium between the processor 1001, the memory 1002, and the communication interface 1003 is not limited in this embodiment of this application. In this embodiment of this application, the processor 1001, the memory 1002, and the communication interface 1003 are connected to each other by a bus 1004 in FIG. 10. The bus is represented by a thick line in FIG. 10. A manner of connection between other components is merely an example for description, and specific connection is not limited thereto. The bus may be classified into an address bus, a data bus, a control bus, and the like. For ease of representation, only one thick line is used for representation in FIG. 10, but this does not mean that there is only one bus or only one type of bus.

A specific connection medium between the processor 1001, the memory 1002, and the communication interface 1003 is not limited in this embodiment of this application. In this embodiment of this application, the processor 1001, the memory 1002, and the communication interface 1003 are connected to each other by a bus 1004 in FIG. 10. The bus is represented by a thick line in FIG. 10. A manner of connection between other components is merely an example for description, and specific connection is not limited thereto. The bus may be classified into an address bus, a data bus, a control bus, and the like. For ease of representation, only one thick line is used for representation in FIG. 10, but this does not mean that there is only one bus or only one type of bus.

It should be understood that the processor mentioned in embodiments of this application may be implemented by hardware or by software. When the processor is implemented by hardware, the processor may be a logic circuit, an integrated circuit, or the like. When the processor is implemented by software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By using example descriptions instead of restrictive descriptions, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated in the processor.

It should be noted that the memory described in this specification is intended to include, but is not limited to, these memories and any memory of another proper type.

Based on a same technical concept, an embodiment of this application further provides a computer-readable storage medium, including a program or instructions. When the program or the instructions are run on a computer, the method shown in FIG. 6 is performed.

Based on a same technical concept, an embodiment of this application further provides a computer program product, including instructions. When the instructions are run on a computer, the method shown in FIG. 6 is performed.

**EP 4 614 914 A1**

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a function specified in one or more processes in the flowcharts and/or in one or more blocks in the block diagrams.

These computer program instructions may be alternatively stored in a computer-readable memory that can instruct the computer or another programmable data processing device to work in a specific manner, so that the instructions stored in the computer-readable memory generate an artifact that includes an instruction apparatus. The instruction apparatus implements a function specified in one or more processes in the flowcharts and/or in one or more blocks in the block diagrams.

These computer program instructions may be alternatively loaded onto the computer or another programmable data processing device, so that a series of operations and steps are performed on the computer or another programmable device, to generate computer-implemented processing. Therefore, the instructions executed on the computer or another programmable device provide steps for implementing a function specified in one or more processes in the flowcharts and/or in one or more blocks in the block diagrams.

It is clear that a person skilled in the art can make various modifications and variations to this application without departing from the protection scope of this application. In this way, this application is intended to cover these modifications and variations of this application provided that they fall within the scope defined by the claims of this application and their equivalent technologies.

**Claims**

1. A signal transmission method, comprising:

obtaining $M$ frequency-domain sequences, wherein the $M$ frequency-domain sequences one-to-one correspond to $M$ first cyclic prefix CP-orthogonal frequency division multiplexing OFDM signals, $M$ is a positive integer, $m$ sequences of the $M$ frequency-domain sequences are the same, and $m$ is an integer less than or equal to $M$ and greater than or equal to 0;

performing preset processing on each of the $M$ frequency-domain sequences, so that a time-domain sequence corresponding to each frequency-domain sequence shifts, and $M$ time-domain sequences are obtained, wherein a time-domain shift amount $\Delta_{i-1}$ of a time-domain sequence corresponding to an $(i - 1)^{th}$ frequency-domain sequence of the $M$ frequency-domain sequences, a total time-domain shift amount $\Delta_i$ of a time-domain sequence corresponding to an $i^{th}$ frequency-domain sequence, and a length $L_i$ of a CP of an $i^{th}$ CP-OFDM signal meet a preset relationship;

adding a CP to each of the $M$ time-domain sequences, to form the $M$ first CP-OFDM signals; and

sending the $M$ first CP-OFDM signals.

2. The method according to claim 1, wherein the preset processing comprises one or more of the following:

frequency-domain shifting;
phase shifting; or
time-domain shifting.

3. The method according to claim 1, wherein the preset relationship comprises:
$\Delta_i - \Delta_{i-1} = L_i + \tilde{c}_i L$, wherein $\tilde{c}_i$ is an integer, and $L$ is a length of the time-domain sequence corresponding to each frequency-domain sequence.

4. The method according to any one of claims 1 to 3, wherein the performing preset processing on each of the $M$

18

frequency-domain sequences comprises:

performing cyclic shifting on the $i^{th}$ frequency-domain sequence $X_i(k)$ of the $M$ frequency-domain sequences, so that a signal in the $i^{th}$ frequency-domain sequence $\overline{X}_i(k)$ shifts in frequency domain, and a second frequency-domain sequence $\tilde{X}_i(k) = X((k + \alpha_i)\ Mod\ N)$ is obtained, wherein $\alpha_i$ is a frequency-domain shift amount, and $N$ is a quantity of reference signals; and

performing phase shifting on the second frequency-domain sequence $\tilde{X}_i(k)$, so that a phase of a signal in the $i^{th}$ frequency-domain sequence $\tilde{X}_i(k)$ shifts, and a third frequency-domain sequence $\overline{X}_i(k) = \tilde{X}_i(k)e^{j2\pi\beta ik}$ is obtained, wherein $\beta_i$ is a phase shift amount, and $\beta_i$ is a real number; and mapping the third frequency-domain sequence $\overline{X}_i(k)$ to $N$ subcarriers by using a map function $f(l)$, $l \in \Phi$, and finding an inverse Fourier transform and performing time-domain shifting for $L$ points, to obtain a first time-domain signal $r_i(t) = \Sigma_{l \in \Phi}\ W_i(l) \cdot \overline{X}_i(f(l))e^{j2\pi l\Delta f(t-L_iTc-ts,i-O_iTc)}$,

wherein $T_c$ is a unit time, $T_c = \dfrac{1}{\Delta fL}$, $\Delta f$ is a subcarrier width, $L_i$ is the length of the CP of the $i^{th}$ CP-OFDM signal, $L_i$ is an integer, $t_{s,i}$ is a starting time of the $i^{th}$ CP-OFDM signal, $t_{e,i}$ is an ending time of the $i^{th}$ CP-OFDM signal, duration of the $i^{th}$ CP-OFDM signal is $t_{e,i} - t_{s,i} = (L_i + L)T_c$, a value range of $t$ is between $t_{s,i}$ and $t_{e,i}$, $0 \le f(l) < N$, $\Phi$ is a set of reference signal subcarriers, $W_i(l)$ is a weighting coefficient for an $l^{th}$ subcarrier, $f(l)$ is an index of $\overline{X}_i(k)$ corresponding to the $l^{th}$ subcarrier, $O_i$ is a time-domain shift amount, and $O_i$ is a real number; and

the total time-domain shift amount $\Delta_i$ and the frequency-domain shift amount $\alpha_i$ that are of the signal in the $i^{th}$ frequency-domain sequence, the phase shift amount $\beta_i$, and the time-domain shift amount $O_i$ meet the following relationship: $\Delta_i = L\beta_i - O_i - L\gamma_i + \dfrac{\alpha_i L}{N_{ZC}}$, wherein $\gamma_i$ is a phase shift amount generated by an antenna port for the signal in the $i^{th}$ frequency-domain sequence $X_i(k)$, and $N_{ZC}$ is a length of $X_i(k)$.

5. The method according to claim 4, wherein $\alpha_i = 0$, $O_i = 0$, $L_i = L_{CP}$, and $\beta_i = i\dfrac{L_{CP}}{L} + \gamma_i$, wherein $L_{CP}$ is a preset value.

6. The method according to claim 4, wherein $\alpha_i = 0$, $\beta_i = \gamma_i$, $L_i = L_{CP}$, and $O_i = -iL_{CP}$, wherein $L_{CP}$ is a preset value.

7. The method according to claim 4, wherein $\alpha_i = 0$, $O_i = 0$, $L_i = L_{CP}$, and $\beta_i = (i + 1)\dfrac{L_{CP}}{L} + \gamma_i$, wherein $L_{CP}$ is a preset value.

8. The method according to claim 4, wherein $\alpha_i = 0$, $\beta_i = \gamma_i$, $L_i = L_{CP}$, and $O_i = -(i + 1)L_{CP}$, wherein $L_{CP}$ is a preset value.

9. The method according to any one of claims 4 to 8, wherein $\beta_i L_\beta$ is a positive integer, and $L_\beta$ is a positive integer, wherein

$$\beta_i L_\beta = \left\lceil \frac{\Delta_{i-1} + L_i + \tilde{c}_i L + O_i + L\gamma_i - \dfrac{\alpha_i L}{N_{ZC}}}{\dfrac{L}{L_\beta}} \right\rceil,$$

, or

$$\beta_i L_\beta = \left\lfloor \frac{\Delta_{i-1} + L_i + \tilde{c}_i L + O_i + L\gamma_i - \frac{\alpha_i L}{N_{ZC}}}{\frac{L}{L_\beta}} \right\rfloor.$$

10. The method according to any one of claims 4 to 9, wherein the method further comprises:
generating the $i^{th}$ frequency-domain sequence $X_i(k)$ based on a time-domain ZC sequence $x(n)$ or a frequency-domain ZC sequence $X(k)$, wherein

$$x(n) = e^{-\frac{j\pi qn(n+c+2p)}{N_{ZC}}}, 0 \le n < N_{ZC},$$

wherein q is a root of the time-domain ZC sequence, $0 < |q| < N_{ZC}$, $|q|$ and $N_{ZC}$ are relatively prime, $N_{ZC}$ is a length of the time-domain ZC sequence and is a positive integer, $c = N \bmod 2$, $p$ is an integer, and $n$ is an index of the sequence *x(n)*;

$$X(k) = e^{-\frac{j\pi qk(k+c+2p)}{N_{ZC}}}, 0 \le k < N_{ZC},$$

wherein *k* is an index of the sequence *X(k)*, *q* is a root of the shown frequency-domain ZC sequence, $0 < |q| < N_{ZC}$, $|q|$ and $N_{ZC}$ are relatively prime, $N_{ZC}$ is a length of the frequency-domain ZC sequence and is a positive integer, $c = N \bmod 2$, and *p* is an integer; and

$$\beta_0 L = L_0 - \frac{qpL}{N_{ZC}} + \gamma_0 L - \frac{\alpha_0 L}{N_{ZC}} + O_i + c_0 L;$$

or $\beta_0 L_\beta$ is a positive integer, and $L_\beta$ is a positive integer.

11. The method according to claim 10, wherein

$$\beta_0 L_\beta = \left\lceil \frac{L_0 - \dfrac{qpL}{N_{ZC}} + \gamma_0 L - \dfrac{\alpha_0 L}{N_{ZC}} + O_i + c_0 L}{\dfrac{L}{L_\beta}} \right\rceil,$$

, or

$$\beta_0 L_\beta = \left\lfloor \frac{L_0 - \dfrac{qpL}{N_{ZC}} + \gamma_0 L - \dfrac{\alpha_0 L}{N_{ZC}} + O_i + c_0 L}{\dfrac{L}{L_\beta}} \right\rfloor.$$

12. The method according to any one of claims 9 to 11, wherein $L_\beta$ is a multiple of at least one of 2, 3, or 5.

13. The method according to any one of claims 1 to 12, wherein the method further comprises:

receiving *M* second CP-OFDM signals, wherein the *M* second CP-OFDM signals are signals that are obtained after the *M* first CP-OFDM signals are transmitted over a channel; and
determining a distance to and/or a velocity of a target based on the *M* first CP-OFDM signals and the *M* second CP-OFDM signals.

14. The method according to any one of claims 1 to 13, wherein the first CP-OFDM signal is a pilot signal.

15. A signal transmission apparatus, comprising:

a processing module, configured to: obtain *M* frequency-domain sequences, wherein the *M* frequency-domain sequences one-to-one correspond to *M* first cyclic prefix CP-orthogonal frequency division multiplexing OFDM signals, *M* is a positive integer, m sequences of the *M* frequency-domain sequences are the same, and m is an integer less than or equal to *M* and greater than or equal to 0; perform preset processing on each of the *M* frequency-domain sequences, so that a time-domain sequence corresponding to each frequency-domain sequence shifts, and *M* time-domain sequences are obtained, wherein a time-domain shift amount $\Delta_{i-1}$ of a time-domain sequence corresponding to an $(i - 1)^{th}$ frequency-domain sequence of the *M* frequency-domain sequences, a total time-domain shift amount $\Delta_i$ of a time-domain sequence corresponding to an $i^{th}$ frequency-domain sequence, and a length $L_i$ of a CP of an $i^{th}$ CP-OFDM signal meet a preset relationship; and add a CP to each of the $M$ time-domain sequences, to form the $M$ first CP-OFDM signals; and

a transceiver module, configured to send the $M$ first CP-OFDM signals.

16. The apparatus according to claim 15, wherein the preset processing comprises one or more of the following:

frequency-domain shifting;
phase shifting; or
time-domain shifting.

17. The apparatus according to claim 15, wherein the preset relationship comprises:

$$\Delta_i - \Delta_{i-1} = L_i + \tilde{c}_i L,$$

wherein $\tilde{c}_i$ is an integer, and $L$ is a length of the time-domain sequence corresponding to each frequency-domain sequence.

18. The apparatus according to any one of claims 15 to 17, wherein when performing the preset processing on each of the $M$ frequency-domain sequences, the processing module is specifically configured to:

perform cyclic shifting on the $i^{th}$ frequency-domain sequence $\overline{X}_i(k)$ of the $M$ frequency-domain sequences, so that a signal in the $i^{th}$ frequency-domain sequence $\overline{X}_i(k)$ shifts in frequency domain, and a second frequency-domain sequence $\tilde{X}_i(k) = X((k + \alpha_i)\ Mod\ N)$ is obtained, wherein $\alpha_i$ is a frequency-domain shift amount, and $N$ is a quantity of reference signals; and
perform phase shifting on the second frequency-domain sequence $\tilde{X}_i(k)$, so that a phase of a signal in the $i^{th}$ frequency-domain sequence $\tilde{X}_i(k)$ shifts, and a third frequency-domain sequence $\overline{X}_i(k) = \tilde{X}_i(k)e^{j2\pi\beta ik}$ is obtained, wherein $\beta_i$ is a phase shift amount, and $\beta_i$ is a real number; and map the third frequency-domain sequence $\overline{X}_i(k)$ to $N$ subcarriers by using a map function $f(l)$, $l \in \Phi$, and find an inverse Fourier transform and perform time-domain shifting for $L$ points, to obtain a first time-domain signal $r_i(t) = \sum_{l \in \Phi} W_i(l) \cdot \overline{X}_i(f(l))e^{j2\pi l\Delta f(t - LiTc - ts, i - OiTc)}$, wherein $T_c$ is a unit time, $T_c = \dfrac{1}{\Delta f L}$, $\Delta f$ is a subcarrier width, $L_i$ is the length of the CP of the $i^{th}$ CP-OFDM signal, $L_i$ is an integer, $t_{s,i}$ is a starting time of the $i^{th}$ CP-OFDM signal, $t_{e,i}$ is an ending time of the $i^{th}$ CP-OFDM signal, duration of the $i^{th}$ CP-OFDM signal is $t_{e,i} - t_{s,i} = (L_i + L)T_c$, a value range of $t$ is between $t_{s,i}$ and $t_{e,i}$, $0 \le f(l) < N$, $\Phi$ is a set of reference signal subcarriers, $W_i(l)$ is a weighting coefficient for an $l^{th}$ subcarrier, $f(l)$ is an index of $\overline{X}_i(k)$ corresponding to the $l^{th}$ subcarrier, $O_i$ is a time-domain shift amount, and $O_i$ is a real number; and
the total time-domain shift amount $\Delta_i$ and the frequency-domain shift amount $\alpha_i$ that are of the signal in the $i^{th}$ frequency-domain sequence, the phase shift amount $\beta_i$, and the time-domain shift amount $O_i$ meet the following

relationship: $\Delta_i = L\beta_i - O_i - L\gamma_i + \dfrac{\alpha_i L}{N_{ZC}}$, wherein $\gamma_i$ is a phase shift amount generated by an antenna port for the signal in the $i^{th}$ frequency-domain sequence $X_i(k)$, and $N_{ZC}$ is a length of $X_i(k)$.

19. The apparatus according to claim 18, wherein $\alpha_i = 0$, $O_i = 0$, $L_i = L_{CP}$, and $\beta_i = i\dfrac{L_{CP}}{L} + \gamma_i$, wherein $L_{CP}$ is a preset value.

20. The apparatus according to claim 18, wherein $\alpha_i = 0$, $\beta_i = \gamma_i$, $L_i = L_{CP}$, and $O_i = -iL_{CP}$, wherein $L_{CP}$ is a preset value.

21. The apparatus according to claim 18, wherein $\alpha_i = 0$, $O_i = 0$, $L_i = L_{CP}$, and $\beta_i = (i + 1)\dfrac{L_{CP}}{L} + \gamma_i$, wherein $L_{CP}$ is a preset value.

22. The apparatus according to claim 18, wherein $\alpha_i = 0$, $\beta_i = \gamma_i$, $L_i = L_{CP}$, and $O_i = -(i + 1)L_{CP}$, wherein $L_{CP}$ is a preset value.

23. The apparatus according to any one of claims 18 to 22, wherein $\beta_i L_\beta$ is a positive integer, and $L_\beta$ is a positive integer,

wherein

$$\beta_i L_\beta = \left\lceil \frac{\Delta_{i-1} + L_i + \tilde{c}_i L + O_i + L\gamma_i - \frac{\alpha_i L}{N_{ZC}}}{\frac{L}{L_\beta}} \right\rceil.$$

, or

$$\beta_i L_\beta = \left\lceil \frac{\Delta_{i-1} + L_i + \tilde{c}_i L + O_i + L\gamma_i - \frac{\alpha_i L}{N_{ZC}}}{\frac{L}{L_\beta}} \right\rceil.$$

24. The apparatus according to any one of claims 18 to 23, wherein the processing module is further configured to: generate the $i^{th}$ frequency-domain sequence $X_i(k)$ based on a time-domain ZC sequence $x(n)$ or a frequency-domain ZC sequence $X(k)$, wherein

$$x(n) = e^{-\frac{j\pi q n(n+c+2p)}{N_{ZC}}}, 0 \le n < N_{ZC},$$

wherein $q$ is a root of the time-domain ZC sequence, $0 < |q| < N_{ZC}$, $|q|$ and $N_{ZC}$ are relatively prime, $N_{ZC}$ is a length of the time-domain ZC sequence and is a positive integer, $c = N \bmod 2$, $p$ is an integer, and $n$ is an index of the sequence $x(n)$;

$$X(k) = e^{-\frac{j\pi q k(k+c+2p)}{N_{ZC}}}, 0 \le k < N_{ZC},$$

wherein $k$ is an index of the sequence $X(k)$, $q$ is a root of the shown frequency-domain ZC sequence, $0 < |q| < N_{ZC}$, $|q|$ and $N_{ZC}$ are relatively prime, $N_{ZC}$ is a length of the frequency-domain ZC sequence and is a positive integer, $c = N \bmod 2$, and $p$ is an integer; and $\beta_0 L = L_0 - \frac{qpL}{N_{ZC}} + \gamma_0 L - \frac{\alpha_0 L}{N_{ZC}} + O_i + c_0 L$; or $\beta_0 L_\beta$ is a positive integer, and $L_\beta$ is a positive integer.

25. The apparatus according to claim 24, wherein

$$\beta_0 L_\beta = \left\lceil \frac{L_0 - \frac{qpL}{N_{ZC}} + \gamma_0 L - \frac{\alpha_0 L}{N_{ZC}} + O_i + c_0 L}{\frac{L}{L_\beta}} \right\rceil,$$

, or

$$\beta_0 L_\beta = \left\lceil \frac{L_0 - \frac{qpL}{N_{ZC}} + \gamma_0 L - \frac{\alpha_0 L}{N_{ZC}} + O_i + c_0 L}{\frac{L}{L_\beta}} \right\rceil.$$

26. The apparatus according to any one of claims 23 to 25, wherein $L_\beta$ is a multiple of at least one of 2, 3, or 5.

27. The apparatus according to any one of claims 15 to 26, wherein

the transceiver module is further configured to: receive $M$ second CP-OFDM signals, wherein the $M$ second CP-OFDM signals are signals that are obtained after the $M$ first CP-OFDM signals are transmitted over a channel; and the processing module is further configured to: determine a distance to and/or a velocity of a target based on the $M$ first CP-OFDM signals and the $M$ second CP-OFDM signals.

28. The apparatus according to any one of claims 15 to 27, wherein the first CP-OFDM signal is a pilot signal.

29. A communication apparatus, comprising a processor and an interface circuit, wherein the interface circuit is electrically coupled to the processor, and the processor performs the method according to any one of claims 1 to 14 by using a logic circuit or executing code instructions.

30. A computer-readable storage medium, wherein the storage medium stores a computer program or instructions, and when the computer program or instructions are run, the method according to any one of claims 1 to 14 is performed.

FIG. 1

FIG. 2

Subcarrier
index

Reference signal

Reference
signal
symbol

Data symbol

FIG. 3

Frequency

CP-OFDM symbols
are not continuous

Time

CP-OFDM

------------- CP

———— OFDM

FIG. 4

Terminal

Satellite

FIG. 5A

FIG. 5B

(a)                                    (b)

FIG. 5C

Obtain $M$ frequency-domain sequences, where the $M$ frequency-domain sequences one-to-one correspond to $M$ first cyclic prefix CP-orthogonal frequency division multiplexing OFDM signals, and $M$ is a positive integer — S601

Perform preset processing on each of the $M$ frequency-domain sequences, so that a time-domain sequence corresponding to each frequency-domain sequence shifts, and $M$ time-domain sequences are obtained, where a total time-domain shift amount of a time-domain sequence corresponding to an $(i{-}1)^{th}$ frequency-domain sequence of the $M$ frequency-domain sequences, a total time-domain shift amount of a time-domain sequence corresponding to an $i^{th}$ frequency-domain sequence, and a length of a CP of an $i^{th}$ CP-OFDM signal meet a preset relationship — S602

Add a CP to each of the $M$ time-domain sequences, to form the $M$ first CP-OFDM signals — S603

Send the $M$ first CP-OFDM signals — S604

FIG. 6

FIG. 7A

Frequency

CP-OFDM symbols
are continuous

Time

- - - - - - - CP

———— OFDM

FIG. 7B

Power
spectrum
(dB)

Out-of-band interference and
leakage reduced through
preset processing

Original CP-OFDM signal

CP-OFDM signal
generated in this
application

Frequency

FIG. 8

**900**

Processing module
901

Transceiver
module 902

FIG. 9

**1000**

1003

Communication
interface

1001

Processor

1004

1002

Memory

FIG. 10

## INTERNATIONAL SEARCH REPORT

| | International application No. |
|---|---|
| | **PCT/CN2022/136021** |

**A. CLASSIFICATION OF SUBJECT MATTER**

H04L27/26(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, ENTXT, VEN, CJFD, CNKI, IEEE: 带外, 干扰, 幅度, 幅值, 相位, 连续, 相近, 不连续, 非连续, 突变, 跳跃, 间断, 偏移, 位移, 移位, 频率, 频域, 时域, 循环前缀, 循环移位, 正交频分复用, out-of-band, interferenc+, amplitude, phase+, continuous, consecutive, discontinuous, inconseutive, incontinuous, similar, mutat+, offset+, frequency, time domain, timing, CP, OFDM

**C. DOCUMENTS CONSIDERED TO BE RELEVANT**

| Category* | Citation of document, with indication, where appropriate, of the relevant passages | Relevant to claim No. |
|---|---|---|
| A | WO 2022020993 A1 (ZEKU TECHNOLOGY (BEIJING) CORP., LTD.) 03 February 2022 (2022-02-03) <br> description, pages 1 and 3, and figures 1-2a | 1-30 |
| A | CN 107645464 A (ZTE CORP.) 30 January 2018 (2018-01-30) <br> entire document | 1-30 |
| A | US 2022116252 A1 (APPLE INC.) 14 April 2022 (2022-04-14) <br> entire document | 1-30 |
| A | CN 103532899 A (SHANGHAI NERC-DTV NATIONAL ENGINEERING RESEARCH CENTER CO., LTD. et al.) 22 January 2014 (2014-01-22) <br> entire document | 1-30 |
| A | CN 112313527 A (QUALCOMM INC.) 02 February 2021 (2021-02-02) <br> entire document | 1-30 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **06 June 2023** | **19 July 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/136021** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 105897643 A (NATIONAL UNIVERSITY OF DEFENSE TECHNOLOGY OF PLA) 24 August 2016 (2016-08-24)<br>entire document | 1-30 |

# EP 4 614 914 A1

| International application No. |
| --- |
| **PCT/CN2022/136021** |

| Patent document cited in search report | | | Publication date (day/month/year) | Patent family member(s) | | | Publication date (day/month/year) |
| --- | --- | --- | --- | --- | --- | --- | --- |
| WO | 2022020993 | A1 | 03 February 2022 | None | | | |
| CN | 107645464 | A | 30 January 2018 | US | 2019312764 | A1 | 10 October 2019 |
| | | | | US | 11088883 | B2 | 10 August 2021 |
| | | | | US | 2021359888 | A1 | 18 November 2021 |
| | | | | US | 11533212 | B2 | 20 December 2022 |
| | | | | EP | 3490208 | A1 | 29 May 2019 |
| | | | | EP | 3490208 | A4 | 24 July 2019 |
| | | | | WO | 2018014815 | A1 | 25 January 2018 |
| | | | | CN | 107645464 | B | 19 August 2022 |
| US | 2022116252 | A1 | 14 April 2022 | WO | 2020146638 | A1 | 16 July 2020 |
| | | | | US | 2019306923 | A1 | 03 October 2019 |
| | | | | US | 11432369 | B2 | 30 August 2022 |
| | | | | CN | 113302890 | A | 24 August 2021 |
| | | | | IN | 202117035206 | A | 12 November 2021 |
| CN | 103532899 | A | 22 January 2014 | CN | 103532899 | B | 06 July 2016 |
| CN | 112313527 | A | 02 February 2021 | TW | 202018323 | A | 16 May 2020 |
| | | | | KR | 20210021313 | A | 25 February 2021 |
| | | | | WO | 2019245703 | A1 | 26 December 2019 |
| | | | | US | 2019383925 | A1 | 19 December 2019 |
| | | | | US | 11280876 | B2 | 22 March 2022 |
| | | | | EP | 3807671 | A1 | 21 April 2021 |
| | | | | IN | 202047051758 | A | 11 December 2020 |
| | | | | SG | 11202011780 | A1 | 28 January 2021 |
| CN | 105897643 | A | 24 August 2016 | CN | 105897643 | B | 16 April 2019 |

Form PCT/ISA/210 (patent family annex) (July 2022)